# EUROPEAN PATENT SPECIFICATION

(11) **EP 2 460 414 B1**
(45) Date of publication and mention of the grant of the patent: **22.08.2018**
(21) Application number: 11170257.7
(22) Date of filing: 16.06.2011
(51) Int. Cl.: A23C 19/16, A01J 25/16, A01J 27/02, B65D 85/76, B65D 65/00, A23C 19/068

(54) **Method for ripening a cheese**
Verfahren zur Käsereifung
Procédé pour l'affinage d'un fromage

(30) Priority: 01.12.2010 NL 2005792; 16.12.2010 NL 2005870; 16.12.2010 EP 10195455
(43) Date of publication of application: 06.06.2012
(73) Proprietor: CSK Food Enrichment B.V., 8938 AS Leeuwarden (NL)
(72) Inventor: Koopmans, Wieger Jan, 8911 ET Leeuwarden (NL); Kevelam, Jan, 6716 HR Ede (NL); Meijer, Willem Cornelis, 6712 HA Ede (NL); Paillart, Maxence Jacky Michel, 6701 BV Wageningen (NL); Thoden van Velzen, Eggo Ulphard, 7006 PN Doetinchem (NL); Schennink, Geraldus Gerardus Johannes, 7031 EB Wehl (NL)
(74) Representative: Nederlandsch Octrooibureau

(56) References cited:
- EP-A1- 0 235 664
- EP-A2- 0 384 553
- EP-A2- 2 335 489
- WO-A1-2010/094682
- WO-A2-2009/047332
- FR-A1- 2 600 310
- GB-A- 2 291 407

## Description

### Field of the invention

The present invention relates to a method for foil-ripening a cheese and to a (foil-packaged) cheese obtainable by such method.

### Background of the invention

Methods for foil-ripening a cheese are known in the art. According to a conventional process for providing a "foil-ripened" or "rindless" cheese, a freshly brined cheese block is packaged into a closed water-impermeable multilayer foil and is then ripened, usually by storage at 7-18 °C during at least 4 weeks. An advantage of the known foil ripening process relates to favourable logistics aspects of the ripening stage. During ripening, the packaged cheese blocks are commonly stacked in layers. Herein, each layer comprises several foil-packaged cheeses which are in close (lateral) contact with each other. The entire stack is tightly surrounded by a crate or the like. After a desired ripening time has been obtained, the foil-packaged cheeses are removed from the stack. The foil can then removed from the ripened cheeses and the resulting cheese blocks can be conveniently sliced or cut before consumption and/or transportation. Another advantage of the traditional method for preparing foil-ripened cheese is that the cheese does not lose moisture during ripening. This is because the (multilayer) foil in which it is packaged during ripening is essentially impermeable to water vapour.

In order to provide ripened cheese which corresponds more to "natural ripened" cheese, WO2009047332 discloses a process for preparing foil-ripened cheese comprising ripening a cheese after brining in a cheese-aging packaging comprising a thermoplastic, monolithic film. The closed cheese-aging packaging has a water vapour transmission rate of at least 10 g/m²/24 hours (measured according to ASTM E96B cup test at 10 °C and 85% relative humidity on a film) and an oxygen permeability (i.e. oxygen transmission rate) of at most 100 cm³/m².24 hours.atm (measured according to ASTM standard D3985 at 10 °C and 85% relative humidity on a film using Mocon equipment).

GB2291407 describes a cheese container comprising a base, a lid and a tubular wall portion which together form a compartment within which cheese is to be accommodated. At least one of the lid and base is displaceable within the tubular wall portion to vary the size of the compartment. The cheese container is characterised by strap means that are engageable around the base and lid to maintain the base and lid at a maximum predetermined spacing from each other for alleviating distortion from its intended shape of cheese accommodated within the compartment.

FR2600310 describes a stackable package, constituted by a rigid box comprising a bottom and open on its face opposite this bottom. The box comprising in its corners blocks protruding with respect to one of the faces of the box. In alignment with the blocks and on the other face of the box, cells are formed capable of receiving the blocks protruding from another box. The depth of these cells is less than the protruding height of the blocks. The stackable package is applied, in particular, to the packing of cheese.

### Summary of the invention

A disadvantage of known (including traditional) foil-ripening processes may be that the development of a typical cheese flavour and consistency may lag, especially as compared with the characteristics of a "natural ripened" (coated) cheese such as described in for example EP1537785, even if the foils of WO2009047332 are employed having a water vapour permeability of at least 10 g/m².day. Herein, "traditional foil ripening" refers to a foil ripening process for cheese wherein the foil is a so-called "barrier foil" i.e. having a water vapour permeability of practically 0 g/m².day (i.e. <0.1 g/m².day); and wherein the oxygen transmission rate of the foil is substantially less than 100 cm³/m².24 hours.atm (at 12°C and 85%RH).

It appears that prior art foils of the have disadvantageous properties or combinations of properties. It is desired to provide a foil which allows a good ripening, without substantial formation of voids in or under the foil, or without mechanical damage to the foil to occur during handling, and which may be relatively easily be applied to a cheese to be ripened therein. Hence, it is an aspect of the invention to provide an alternative method of foil ripening which may preferably obviate one or more of above disadvantages.

It surprisingly appears that a method as defined in the claims, and further elucidated below, has with respect to the ripening process comparable or even better results as state of the art foil ripening processes, whereas nevertheless the foil properties are more robust. Further, void formation when applying the foil to the cheese is less or negligible, the foil fits well around the cheese, and thus cheese protection and oxygen barrier properties are better.
In a first aspect, the invention provides a method for foil-ripening a cheese comprising:
(a) providing a cheese having an edge, a first face and a second face;
(b) packaging said cheese in a closed cheese-ripening foil having a water vapour transmission rate of at least 5 g/(m².24 hours) at 12 °C and 85% relative humidity, having an oxygen transmission rate of ≤1100 cm³/m².24 hours.atm at 12 °C and 85% relative humidity, especially < 100 cm³/m².24 hours.atm and preferably having a tensile modulus in the range of 150-400 MPa at 12 °C and 85% relative humidity; and
(c) ripening the foil-packaged cheese wherein during ripening moisture is allowed to evaporate from said cheese, wherein the ripening is optionally in the presence of a frame which surrounds at least part of the edge of said cheese, wherein when the ripening is in the presence of the frame, preferably the frame is in contact with the edge in the range of 1-80% of the surface of the edge, especially in the range of 10-80% of the surface of the edge.
With such method, a cheese may be obtained with comparable or even better taste and/or flavour properties, without fungus formation. Further, the foil may be applied well-closing around the cheese, and in addition, the foil appears to be sufficiently robust (especially with respect to elasticity and/or tear strength). In comparison to prior art foils, the foils employed in the present method offer more protection to the cheese, by suffering less from mechanical damage and/or by preventing or reducing voids to occur between the cheese and the foil. It is noted that in said voids, unwanted fungus growth can develop during ripening.

In a specific embodiment, the cheese-ripening foil has an oxygen transmission rate in the range ≤ 50, or ≤ 20 cm³/m².24 hours.atm at 12 °C and 85% relative humidity, like ≤ 10 cm³/m².24 hours.atm at 12 °C and 85% relative humidity. Even more especially, the cheese-ripening foil has an oxygen transmission rate in the range of ≤ 5 or even ≤ 1 or especially ≤ 0.5 cm³/m².24 hours.atm at 12 °C and 85% relative humidity. With such properties, it surprisingly appears that formation of fungus can be substantially eliminated even if no fungicide is applied or added to the cheese or the foil, such as an organic acid or a polyene fungicide, such as natamycin, or a combination of both.

In an embodiment, the cheese-ripening foil has a tensile modulus in the range of 150-250 MPa at 12 °C and 85% relative humidity. With these properties, foils with good properties are used and cheeses with good properties may be obtained. Especially, the cheese-ripening foil has a tear resistance of at least 4000 cN/mm measured in expansion direction (transversal direction) at 12 °C and 85% relative humidity, especially at least 10000 cN/mm, such as at least 12000 20000 cN/mm, like at least 20000 cN/mm. For instance, the tear resistance in expansion direction may be in the range of 4000-50000 cN/mm, such as 4000-25000 cN/mm. Further, especially, the cheese-ripening foil has a tear resistance of at least 4000 cN/mm measured in extrusion direction (longitudinal direction) at 12 °C and 85% relative humidity, especially at least 10000 cN/mm, such as at least 12000 cN/mm, like at least 14000 cN/mm. For instance, the tear resistance in extrusion direction may be in the range of 4000-50000 cN/mm, such as 4000-25000 cN/mm.

A too low WVTR may lead to a less appreciated flavour/taste or texture formation. A too high WVTR may lead to an excessive weight loss of the cheese during ripening. According to the invention, the cheese-ripening foil has a water vapour transmission rate (WVTR) in the range of at least 5 g/(m².24 hours) at 12 °C and 85% relative humidity.

In a further embodiment (see also below), the foil-packaged cheese is preferably ripened under (1) a condition of relative humidity in the range between 20-95%, especially 30-85 %. Alternatively or more preferably additionally, the foil packaged cheese is preferably ripened under (2) a condition of the air near the foil-packaged cheese being displaced at a rate of 0.01 - 5 m/s, more preferably at a rate of 3 - 5 m/s. Especially, either under condition (1) or under condition (2), or more preferably if conditions (1) and (2) apply both, during ripening under (c.) of the method the total amount of moisture which is allowed to evaporate from the foil-packaged cheese is 0.5 - 20 wt.%, more preferably 1-15 wt.%, most preferably 1-10 wt.% relative to the weight of the foil-packaged cheese provided under (b.) of the method.

In a specific embodiment (see also below), the cheese-ripening foil comprises a multi-layer foil as cheese-ripening foil. The first layer (of such a multilayer cheese-ripening foil), i.e. the layer in contact with the cheese is especially a seal layer. The outer layer (of such a multilayer cheese-ripening foil), i.e. the layer in contact with the exterior/atmosphere is especially a protective layer. Preferred layer compositions for - especially multilayered - cheese-ripening foils are further described below. An especially preferred layer for a (multi-layer) cheese-ripening foil comprises a copolyester, more preferably a statistical, aliphatic-aromatic co-polyester, and most preferably a statistical, aliphatic-aromatic co-polyester comprising the monomers 1,4-butanediol, adipic acid, and a terephthalic acid. Hence, in a preferred embodiment, a layer of the multi-layer foil in contact with the cheese (first layer) and/or an outer layer of the multi-layer foil comprises a copolyester, more preferably a statistical, aliphatic-aromatic co-polyester, and most preferably a statistical, aliphatic-aromatic co-polyester comprising the monomers 1,4-butanediol, adipic acid, and a terephthalic acid. A statistical, aliphatic-aromatic co-polyester comprising the monomers 1,4-butanediol, adipic acid, and a terephthalic acid is commercially available, for example as Ecoflex®. It is noted that said first layer and/or outer layer may additionally or alternatively comprise a polyester urethane copolymer.

Preferably, an intermediate layer is applied, separating the first and the outer layer. Hence, in a preferred embodiment, the layer of the multi-layer foil in contact with the cheese (first layer) and the outer layer of the multi-layer foil comprises a statistical, aliphatic-aromatic co-polyester of the monomers 1,4-butanediol, adipic acid, and a terephthalic acid, and those both layer sandwich an intermediate layer. The intermediate layer may for instance comprise an oxygen barrier layer, such as those known to the person skilled in the art. An example is for instance an ethylene vinyl alcohol (EVOH) co-polymer based layer, or a layer comprising a polyamide such as a nylon layer. It is noted, however, that said intermediate layer with said preferred composition is also preferred in other multilayer cheese ripening foils, especially in foils having an oxygen transmission rate of ≤ 100 cm³/m².24 hours.atm at 12 °C and 85% relative humidity.

In a further aspect, the invention provides a cheese-ripening foil having a water vapour transmission rate of at least 5 g/(m².24 hours) at 12 °C and 85% relative humidity, an oxygen transmission rate of ≤ 100 cm³/m².24 hours.atm at 12 °C and 85% relative humidity, such as < 100, like ≤ 50, or ≤ 20 cm³/m².24 hours.atm at 12 °C and 85% relative humidity; and a tensile modulus in the range of 150-400, especially 150-250 MPa at 12 °C and 85% relative humidity, especially further comprising a carbon dioxide transmission rate CTR > 1000 cm³/m².24 hours.atm at 12 °C and 85% relative humidity. Even more especially, the cheese-ripening foil has an oxygen transmission rate in the range of ≤ 5 or even ≤ 1 or especially ≤ 0.5 cm³/m².24 hours.atm at 12 °C and 85% relative humidity. In yet a further aspect, the invention also provides a foil-packaged cheese, optionally at least partially surrounded by a frame, obtainable according to the method as described above or below.
On a separate notice, in the process according to WO2009047332, the cheeses are preferably not stacked during ripening as in the traditional foil-ripening process. In a stacked arrangement, moisture will not evaporate from each foil-packaged cheese (at least to a comparable degree amongst different cheeses). Instead it is preferred that in the process of WO2009047332, during ripening at least part (preferably at least 25%, more preferably at least 40%, most preferably at least 60%) of the surface of the foil-packaged cheese is exposed to an atmosphere having a relative humidity of less than 100%. It is especially preferred that ripening is realized under conditions wherein each cheese is individually placed on (wooden) shelves and wherein there is essentially no contact between the cheeses. Under these conditions of so-called "individual ripening", adequate moisture evaporation from each cheese can be achieved.
However, it has been observed that under conditions of "individual ripening" of foil-packaged cheeses, the cheeses tend to lose their original shape in time. In particular, they tend to flatten in a direction parallel to the force of gravity, and to expand in a direction perpendicular to the force of gravity. This shape loss, which increases with increasing ripening time, is highly undesirable since many industrial apparati, forms of packaging etc. used in cutting, slicing and/or packaging the foil-ripened cheese, rely on standardised dimensions thereof which need to be met within tight limits. Furthermore, said shape loss of the cheese may generally lead to unwanted cheese loss occurring during cutting or slicing of the cheese.

The water vapour transmission rate of the cheese-ripening foil is preferably measured according to ASTM E96B cup test at 12 °C and against 85% relative humidity (the relative humidity within the cup is 100%).
The cheese obtained with such ripening method may have a desirable and pleasant flavour, comparable to especially Gouda cheese, due to the presence of key flavours, which may not be the case, or to a lesser extent, with prior art foil-ripened cheeses. Hence, the invention especially also provides the use of the cheese-ripening foil as defined herein, for foil-ripening a cheese, especially a Gouda-type cheese, with naturally ripened flavour characteristics. Even more especially, the invention provides the use of a cheese-ripening foil as defined herein, for foil-ripening a cheese, especially a Gouda type cheese, having an enhanced flavour spectrum of one or more of (preferably at least two or more of, yet even more preferably at least three or more of) 2-methylpropanoic acid, 2-methylbutanoic acid, 3-methylbutanoic acid, butyric acid, 2-methylpropanal, hexanoic acid, octanoic acid, and decanoic acid, more especially one or more of (preferably at least two or more of, yet even more preferably three of) 2-methylbutanoic acid, 3-methylbutanoic acid, and octanoic acid, relative to foil ripened cheese, especially a Gouda type cheese, with a foil having an OTR value ≤ 100 cm³/m².24 hours.atm at 12 °C and 85% relative humidity.

Also herein, the closed cheese ripening foil preferably has a tensile modulus in the range of 150-400 MPa at 12 °C and 85% relative humidity.

Without being bound to theory, it is believed that the branched chain acids 2-methylbutanoic acid and 2-methylbutanoic acid are obtained by amino acid catabolysis of strains of *Lactococcus lactis* present in the cheese, as part of the starter culture; cf. E. Chambellon et al. in J. Bacteriology 2009, 191, pp. 873-881. Thus, the invention especially also provides the use of the cheese-ripening foil as defined herein, for foil-ripening, especially a Gouda-type, cheese with naturally ripened flavour characteristics, wherein said flavour characteristics relate.

Thus in an embodiment of the method according to the invention, the cheese - which is preferably of the Gouda type - contains branched organic acids obtainable by amino acid catabolism in *Lactococcus lactis* spp., preferably in levels which are comparable to those occurring in naturally ripened - preferably Gouda type - cheese. Hence, the invention also provides a method as defined herein, wherein the cheese is preferably of the Gouda type, wherein the cheese contains branched organic acids obtainable by amino acid catabolism in Lactococcus lactis spp in levels which are comparable to those occurring in naturally ripened cheese, preferably of the Gouda type. Hence, the cheese-ripening foil may be used for foil-ripening a cheese, especially a Gouda-type cheese, having an enhanced flavour spectrum of one or more of 2-methylbutanoic acid, 3-methylbutanoic acid, and octanoic acid, relative to foil ripened cheese, especially a Gouda type cheese, with a foil having an OTR value ≤ 100 cm³/m².24 hours.atm at 12 °C and 85% relative humidity.

In an embodiment, the cheese has a flat-cylindrical shape which may correspond to that of a (Gouda) cheese wheel. More preferably, the cheese is an essentially block shaped cheese. It is further preferred that the block-shaped cheese has a length (L), a width (b) and a height (h), the height preferably being smaller than the length and the width. Then, the dimensions of each of the first face and the second face are essentially provided by the length and the width of said cheese, and the edge is essentially described by the remaining surface area residing in between the first and the second face. In a further preferred example of an essentially block-shaped cheese, length L = 20-40 cm, width b = 20-70 cm and height h = 5-15 cm. The essentially block-shaped cheese is preferably a so-called Euroblock-cheese, having approximate dimensions length L = 30 cm, width b = 50 cm, height h = 10 cm. In an embodiment, the cheese may be substantially spherical, with small substantially flat first and second faces, such as an Edam type of cheese.

The invention also provides a cheese-ripening foil having a water vapour transmission rate of at least 5 g/(m².24 hours) at 12 °C and 85% relative humidity, an oxygen transmission rate of > 100 and < 1000 cm³/m².24 hours.atm at 12 °C and 85% relative humidity, and a tensile modulus in the range of 150-400, especially 150-250 MPa at 12 °C and 85% relative humidity.

The invention also provides a foil-packaged cheese (of which the edge is) at least partially surrounded by a frame, wherein the foil has a water vapour transmission rate of at least 5 g/(m².24 hours) at 12 °C and 85% relative humidity. It is preferred that said foil-packaged cheese is obtainable according to the method of the invention. The invention also provides the cheese *per se,* obtainable after the method of foil-ripening.

### Detailed description of the invention

### Description of the figures

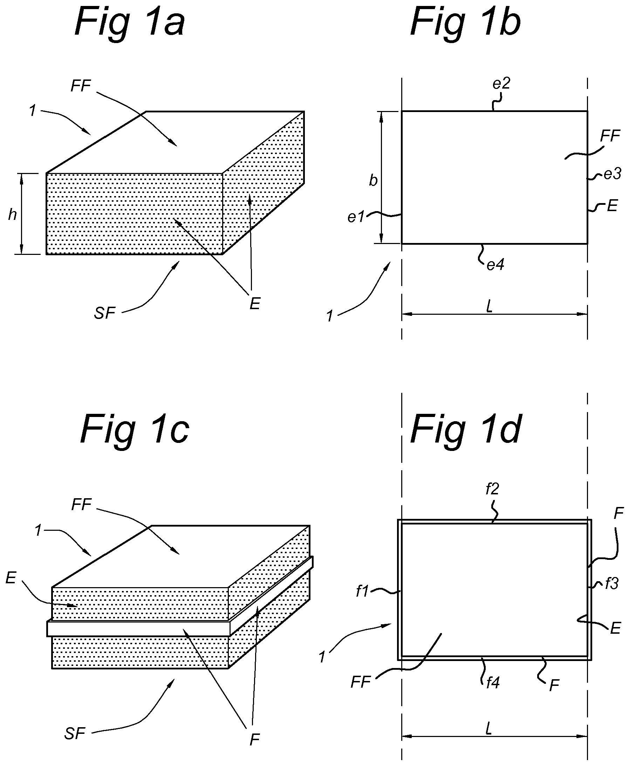

Figure 1a illustrates an example of an essentially block shaped foil-packaged cheese in perspective view (top left) The cheese (indicated with reference 1) resides with its second face (SF) on an imaginary horizontal surface. Its first face (FF) faces upwards. The visible part of the edge (E) is shown in a dotted pattern. The height of the cheese 1 is indicated with reference h.
Figure 1b shows the same block-shaped foil-packaged cheese in top view. Joint line pieces e1+e2+e3+e4 form the top view projection of the edge E of the (foil-packaged) cheese 1. Line pieces e2 and e4 have outer dimensions L (length); line pieces e1 and e3 have outer dimensions b (width).
Figure 1c illustrates an example of the essentially block-shaped foil-packaged cheese, now surrounded by a frame in perspective view. The frame (F) surrounds the edge E of the foil-packaged cheese, partly covering it. Hence, the frame surrounds at least part of the (foil-packaged) cheese. As will be clear to a person skilled in the art, the frame F may also entirely surround the (foil-packaged) edge E.
Figure 1d provides a top view of the essentially block-shaped foil-packaged cheese surrounded by the frame (F). Joint line pieces f1+f2+f3+f4 form the top view projection of the frame surrounding the cheese 1. As shown by the dotted lines, the inner dimensions of the frame (F) match the outer dimensions of the edge (E).
   In the schematic drawings of figure 1c and Id, the frame F surrounds (or is extending over) the total length of the edge E (i.e. edges e1, e2, e3 and e4, thus 2 x L + 2 x b), but the height of the frame is smaller than the height h of the edge E. The total length of the edge E is herein also indicated as circumferential length.

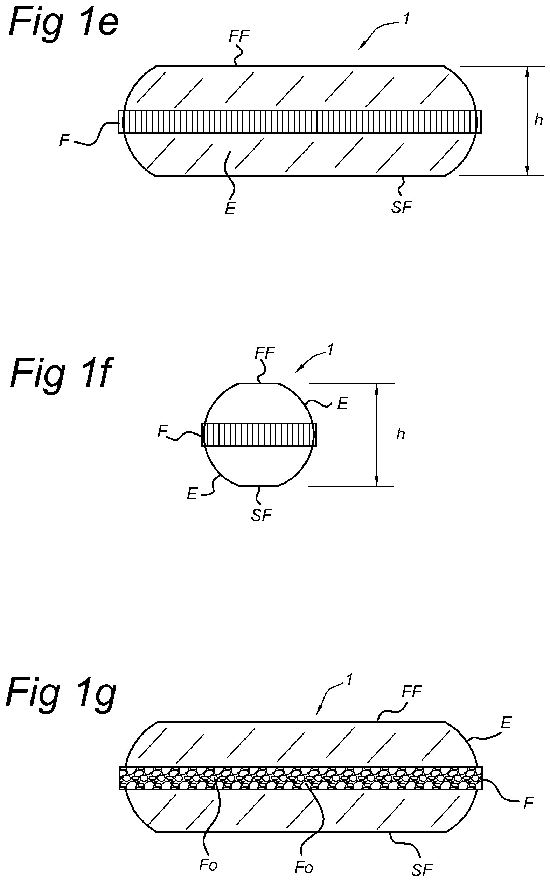

Figure 1e schematically depicts an example of cheese 1 having a flat-cylindrical shape which may correspond to that of a Gouda cheese wheel, with frame F surrounding at least part of the edge E. As will be clear to a person skilled in the art, the frame F may also entirely surround the (foil-packaged) edge E.
Figure If schematically depicts an example of cheese 1 having a substantially spherical shape, with small substantially planar parts at the top and bottom (i.e. first face FF and second face SF) which may correspond to that of an Edam type cheese. As will be clear to a person skilled in the art, the frame F may also entirely surround the (foil-packaged) edge E.
Figure 1g schematically depicts an embodiment wherein the frame F comprises openings, which may further allow water vapour to escape from the cheese into the surrounding atmosphere. The openings are indicated with reference Fo, and may have any shape. For instance, the frame F may have circular openings Fo, as here depicted, but the frame F may also be a grating type of frame, etc. As will be clear to a person skilled in the art, the frame F may also entirely surround the (foil-packaged) edge E.

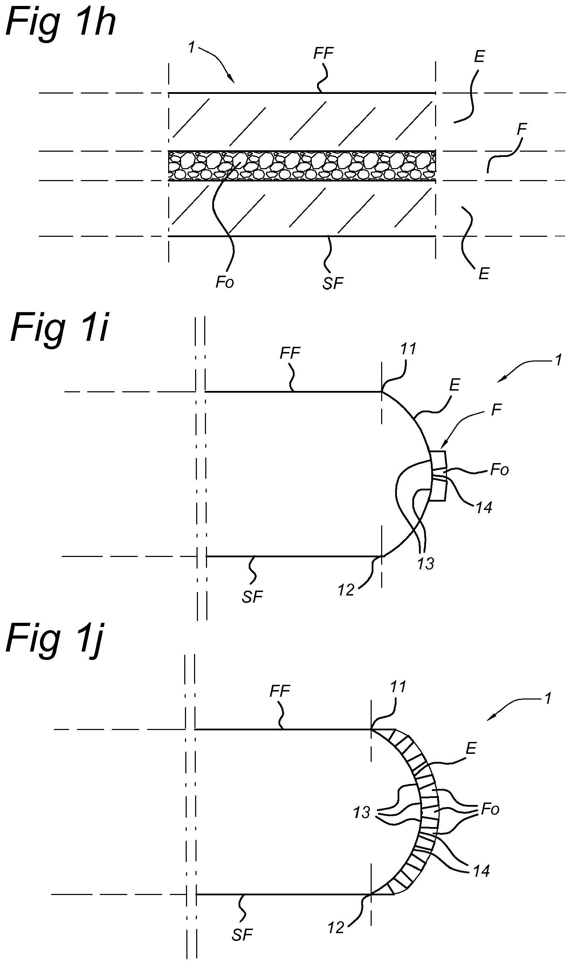

Figure 1h schematically depicts such frame F with openings or perforation Fo in more detail, again, by way of example with circular openings Fo.
   The frame F is in contact with the edge E. To estimate the percentage the frame F is in contact with the edge E, the edge area in contact with the frame is related to the total edge area. When openings Fo are present, the edge area in front of the frame openings Fo is not counted as area of the edge E that is in contact with the frame F.
Figure 1i schematically depicts a cross-section of an embodiment of cheese 1 with frame F around the edge E. The first surface FF and second surface SF change into the edge E at positions 11 and 12, respectively. The edge E is in contact with the frame F at areas 13. Here, the frame F comprises an opening Fo. The edge "behind" this opening, indicated with reference 14, does thus not count as edge area in contact with the frame F.
Figure 1j schematically depicts an embodiment wherein the frame F entirely surrounds the (foil-packaged) edge E. Here, by way of example, a Gouda type of cheese is depicted, and by way of example the frame FD has perforations or holes Fo. As can be seen from this schematic drawing, the frame surrounds substantially the entire edge E (100% of E), but the contact surface of the frame F with the (foil-packaged) edge E is less than 100% in this embodiment, such as about 50-60%. This may facilitate moisture evaporation of the cheese, also via the edge E. Hence, in a specific embodiment, the edge is surrounded for 100% (or less) with the frame, but the frame is in contact with 80% or less of the edge (due to the presence of perforation or holes). The perforations or holes, herein, such as in the porous frames, are through-holes or through-perforations. The schematic drawings are not necessarily on scale. The perforation Fo may for instance have diameters in the range of 0.5 nm-50 mm.

Embodiments of the invention will be described, by way of example only, with reference to the accompanying schematic drawings in which corresponding reference symbols indicate corresponding parts, as indicated above. The drawings may not be drawn to scale. The invention is not limited to the embodiments schematically depicted in the drawings. For instance, the cheese 1 may also have a cylindrical shape. Further, in some embodiments the frame may be applied, whereas in other embodiments the frame may not be applied.

### Definitions

The verb "to comprise" as is used in this description and in the claims, and its conjugations, is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

### Method to determine permeability parameters of foils

The gas permeability of the foils can be analysed according to two methods: diffusion pot or ASTM D3985. The diffusion pot method is preferably used to determine gas (oxygen or carbon dioxide) transmission rates of higher than 100 ml O₂ (or CO₂) /m².day.bar; however D3985 can also be applied The ASTM D3985 method hass been used to determine gas (oxygen or carbon dioxide) transmission rates of 100 ml O₂ (or CO₂)/m².day.bar or lower. Both methods are set out below.

### - Diffusion pot (for high diffusivity properties):

The foil is clamped between 2 gas chambers where the flow, gas concentrations and the pressure are controlled and measured. The permeability of the foil to oxygen and carbon dioxide molecules is determined by following the gas concentrations inside the bottom chamber. This system is placed inside a climate chamber where the temperature and the relative humidity are controlled. For this experiment, the same temperature and relative humidity that one's observed inside the cheese ripening cells are applied (respectively 12°C and 85% RH). The top chamber is continuously flushed with humidified (85%) atmospheric air (21% O₂, 0.4% CO₂ and 78% N₂). At several times (typically during a week), the gas composition and the pressure of the bottom pot is measured and recorded. Herein, commercial equipment may be conveniently used for example respectively a Dansensor Checkmate II and GE Sensing (Druck, 0.01 mbar accuracy). The oxygen (OTR) and carbon dioxide (CTR) transmission rate is calculated by a linear regression of the logarithm difference of the partial pressure between the 2 pots versus time.

### - ASTM D3985 method

This method is preferably performed using a Mocon Oxtran type 2/20 MH equipment. The gas (oxygen or carbon dioxide) permeability of the foil is measured at 12°C with gas humidified to 85%.

### Water vapour transmission rate

The water vapour transmission rate is preferably determined according to the ASTM E96B method. PMMA-cups filled up with demi-water are closed with the foils. The complete set up is placed inside a climate chamber where the temperature and the relative humidity are constantly controlled (12°C and 85%). The weight loss of the cup is followed in time during one to two weeks. Knowing the water loss and the area of the foil tested, the WVTR is calculated using linear regression. The WVTR is expressed in g water/m².day

### Method to determine permeability parameters and mechanical properties

The mechanical properties of the foils are determined under two storage conditions. Before measuring, the foils are stored minimum one week under the storage conditions: 20°C & 50% relative humidity and 12°C & 85% relative humidity.

The E-Modulus, the tensile strength test, the elasticity test, and the strain at break have been measured according to the ISO 527-3 protocol. The samples used for these measurements were prepared following the recommendations described in the protocol ISO 1184-1985. The E-modulus is being measured in extrusion (longitudinal) direction of the foil, unless indicated otherwise. The strain rate when measuring the E-modulus was 1 mm/minute.

The tear test is performed according to ISO 6383/2 and comprises initiating one tear on the foil and measure the power needed to increase the tear. This test is realised in two directions: in the extrusion and the expansion directions of the foil. For foil destined for cheese ripening, the preferred minimal tear test value (in both directions) is established at 4000 cN/mm, more preferably at 10000cN/mm. The strain rate when measuring the tear test was 100 mm/minute.

The impact test (unit: J/mm) is performed according to ISO 7765-2 (using falling dart equipment) and comprises determining the strength needed to perforate the foil when a dart falls from 1 meter on the stretched foil. The ripening cheese foil should be resistant enough to avoid any perforations if the cheese falls on the ground or if it lays on non-smooth wooden shelves. The impact test value is preferably higher than 10J/mm. However this parameter is likely not as important as E-modulus or tear test value.
The cheese-ripening foil. Preferably, the cheese-ripening foil is provided as a monolithic film. The monolithic film may be provided as a single layer foil or as a multilayer foil. As used herein, a monolithic film is a film not containing holes, perforations, pores or micro-pores that provide a direct pathway for water molecules to flow through. The monolithic film is in an embodiment preferably defined as in WO2009047332, with the exception that the foils are designed in such a way, that the OTR has the herein indicated preferred value of, in an embodiment, > 100, especially in an embodiment the range of >100 and < 1000 or even < 900 cm³/m².24 hours.atm (at 12 °C and 85%RH). As indicated above, surprisingly it appears that the flavour composition is better at higher OTR values. However, the cheese-ripening film may also be provided as a perforated or (micro-) porous film or as a multilayer foil wherein optionally one or more of the layers are present as a perforated or (micro)porous film. Herein, the terms "perforated film" and "microporous film" are considered clear to the skilled person; these terms are preferably defined as in WO2009047332.
In yet a further embodiment, the OTR value is ≤ 100 cm³/m².24 hours.atm, especially 10 ≤ cm³/m².24 hours.atm, even more especially ≤ 1 cm³/m².24 hours.atm at 12 °C and 85%RH. The flavour/taste may also be relatively good, while fungi development and/or growth may be inhibited or even prevented, even if no fungicide is applied or added to the cheese or the foil.

The cheese ripening foil can in principle be any foil which has the herein specified WVTR and OTR. However, it appears that not every foil is suitable as packaging foil for foil ripening a cheese. Some foils are much too rigid, such as some prior art foils, and do not shape well around the cheese, leading to for instance undesired voids and/or bad closing (which may for instance be undesired in view of shape, but also in view of fungus growth). It appears that a tensile modulus of 150-400, even more especially 150-250 MPa may give best results. Hence, the invention further provides a method wherein the cheese-ripening foil has a tensile modulus in the range of 150-250 MPa. It is noted that WO2009047332 is silent on the E-modulus.

The water vapour transmission rate of the cheese-ripening foil is preferably at least 10 g/(m².24 hours), more preferably at least 15 g/(m².24 hours) at 12 °C and 85% relative humidity. Accordingly, even better flavour and/or texture properties can be obtained. Alternatively or more preferably additionally, the water vapour transmission rate of the cheese-ripening foil is preferably at most 300 g/(m².24 hours), more preferably at most 200 g/(m².24 hours), even more preferably at most 150 g/(m².24 hours) at 12 °C and 85% relative humidity. If the water vapour permeability is too high, efficiency of the cheese making process may be reduced as result of excessive moisture loss during ripening, whilst no noticeable further quality gain of the ripened cheese will be achieved.

In order to be able to even better function as a packaging, the cheese-ripening foil preferably further possesses sufficient mechanical properties such as for example puncture resistance and tear strength. In view of this, the thickness of the cheese-ripening foil is preferably at least 15 µm, more preferably at least 25 µm. The thickness of the cheese-ripening foil is preferably less than 200 µm, more preferably less than 100 µm, most preferably less than 75 µm. If the ripening foil is too thick, sealing may take too much time.

Herein, oxygen transmission rate is preferably measured according to ASTM standard D3985 at 12 °C and 85% relative humidity.

The cheese-ripening foil is preferably embodied as a mono- or multilayer foil comprising a polycondensation polymer.
For instance, Ecoflex is a statistical, aliphatic-aromatic co-polyester of the monomers 1,4-butanediol, adipic acid, and a terephthalic acid, and may preferably be used as foil or foil layer in a multi-layer foil. Polymers are for instance described in EP1074570. Enfresin is a polyester urethane copolymer, which may also be particularly suitable, and which may be used as foil or foil layer in a multi-layer foil. Other polymers are also described in EP1307510. For instance, a resin composition obtained by blending: (1) an aliphatic polyester formed by an esterification of aliphatic dicarboxylic acid or its anhydride and aliphatic glycol; and/or unsaturated aliphatic dicarboxylic acid or its anhydride or unsaturated aliphatic glycol, and a glycolremoving reaction thereafter; and (2) a polyester urethane formed by a reaction of aliphatic polyester and diisocyanate, may be suitable as foil layer. Further polymers as foil or as foil layer in a multilayer foil may be polyester amides, such as for instance described in WO9621692. PEBAX is described in EP1500684, EP1262527 and WO03050159. As part PEBAX, Enfresin, Ecoflex, Akulon, Arnitel, may be obtained from BASF, Arkema and DSM.
The cheese-ripening foil may for instance be embodied as a multi-layer foil. In an embodiment, the layers of the multi-layer foil comprise one or more materials selected from the group consisting of (1) a (preferably statistical) aliphatic-aromatic co-polyester of the monomers 1,4-butanediol, adipic acid and terephthalic acid, (2) a polyester urethane copolymer, (3) a layer based on a resin composition obtained by blending: (a) an aliphatic polyester formed by an esterification of aliphatic dicarboxylic acid or its anhydride and aliphatic glycol; and/or unsaturated aliphatic dicarboxylic acid or its anhydride or unsaturated aliphatic glycol, and a glycol removing reaction thereafter; and (b) a polyester urethane formed by a reaction of aliphatic polyester and diisocyanate, (4) polyester amides, especially polyester block amides and (5) a layer based on a starch blend. Each of these materials may be present as a single layer or as a blend with another material which is preferably selected from said group of materials (1)-(5) indicated above. Optionally, the multilayer foil may further comprise a polyamide, especially a polyamide-6 (such as an Akulon®), or a polyetherester (such as an Arnitel®), or a mixture of both. The polyamide or the polyetherester may be present as a separate layer or may be mixed in with another material in a layer which is selected from the group of materials (1)-(5) indicated above. The thickness of the foil may especially be in the range of 20-100 µm, such as 30-90 µm, especially 40-70 µm.
As indicated above, the foil or multi-layer foil may optionally comprise a fungicide, such as natamycin.
Good combinations of foils may be multi-layers comprising the set layers of (1) Ecoflex, a starch blend and Ecoflex, (2) Ecoflex, Enfresin and Ecoflex, or Ecoflex, Pebax, and Ecoflex. Good results are obtained when the multi-layer foil comprises at least one layer of a (preferably statistical) aliphatic-aromatic co-polyester of the monomers 1,4-butanediol, adipic acid an terephthalic acid. Especially, good multi-layer foils may comprise a sandwich structure with a first and a third layer of (preferably statistical) aliphatic-aromatic co-polyester of the monomers 1,4-butanediol, adipic acid and terephthalic acid, sandwiching another layer, such as a starch blend, or a polyester urethane copolymer, or a polyester block amide. As will be clear to the person, the foil may comprise one layer, or two layers, or three layers, or more layers, but complies at least with the herein indicated conditions for WVTR and OTR. Combinations of two or more of the herein indicated layers may also be possible. The invention provides a cheese-ripening foil having a water vapour transmission rate of at least 5 g/(m².24 hours) at 12 °C and 85% relative humidity, an oxygen transmission rate of ≤ 100 cm³/m².24 hours.atm at 12 °C and 85% relative humidity; and a tensile modulus in the range of 150-400, especially 150-250 MPa at 12 °C and 85% relative humidity. Especially, such cheese-ripening foil may further comprise a carbon dioxide transmission rate CTR > 1000 cm³/m².24 hours.atm at 12 °C and 85% relative humidity.

### The cheese

The cheese, which is preferably obtainable according to the method of the invention, is preferably a semi-hard or hard cheese. The cheese is preferably selected from the group consisting of Gouda, Edam, Tilsit, Gruyere, Cheddar, Emmental and Maasdam, especially from the group consisting of Gouda, Edam, Tilsit, Gruyere and Cheddar, even more especially the cheese is a Gouda. In an especially favourable embodiment, the cheese has a relatively low fat content, i.e. a fat content of 30 wt.% or less relative to the dry weight of the cheese. Such a cheese is even more prone to undergoing shape loss during ripening, so that the presence of the frame during ripening is even more beneficial.
In a particular embodiment, the cheese comprises propionibacteria, such as Maasdam or Emmental. This cheese is at least partially ripened at a temperature of between 16-25 °C causing the propionibacteria to produce carbon dioxide at enhanced rates, so as to introduce eyes in the cheese. At these relatively high temperatures, the cheese has an enhanced risk to lose its shape during ripening, so that the presence of the frame during ripening is even more beneficial. It has been found that in case the cheese comprises propionibacteria or produces by other means carbon dioxide at relatively high rates, the foil preferably further comprises a carbon dioxide transmission rate (CTR) which exceeds 500 ml/m².bar.day at 12°C and 85%RH. It is especially preferred that CTR > 500, more preferably CTR > 1000 or > 5000 ml/m².bar.day at 12°C and 85%RH. Accordingly, carbon dioxide can escape from the foil-packaged cheese without accumulating between the foil and the cheese or even causing the foil to blow up. For practical reasons, CTR < 100,000 or more preferably < 50,000 or most preferably 25,000 ml/m².bar.day at 12°C and 85%RH. Hence, in a further embodiment, the invention provides a method (and foil) as indicated herein, wherein the foil has a carbon dioxide transmission rate CTR > 1000 cm³/m².24 hours.atm at 12 °C and 85% relative humidity.

In yet a further embodiment, the cheese does not comprise propionibacteria, which may for instance be the case for Gouda or Edam.

In another embodiment, the cheese, preferably Gouda-type cheese, further comprises a strain of *Lactobacillus helveticus.* Also this cheese is preferably ripened at relatively high temperatures of between 14-25 °C.

After removing the foil and the frame, the cheese preferably comprises a drying rind which is visibly present near one or both of its faces and/or the edge. That is, the cheese preferably comprises an outer rind and an interior cheese mass, wherein the colour of the outer rind associated with the first or the second face is preferably darker than the colour of the interior cheese mass.

In a specific embodiment, the foil does (in the absence of a frame) not include a polyether ester. In het yet another embodiment, the foil does (in the absence of a frame) not include a polyether ester foil. In a further embodiment, the invention does (in the absence of a frame) not include polyether ester foil having a thickness of 30 µm. In a further embodiment, the invention does (in the absence of a frame) not include polyether ester foil having a thickness of 30 µm ± 5 µm, especially not a polyether ester foil having a thickness of 30 µm ± 2 µm. In yet a further embodiment, the invention does (in the absence of a frame) not include a polyether ester foil having an OTR of >1000 cm³/m².24 hours.atm at 12 °C and 85% relative humidity. In yet a further embodiment, the invention does (in the absence of a frame) not include a polyether ester foil having an OTR of >1000 cm³/m².24 hours.atm at 12 °C and 85% relative humidity and a WVTR of water vapour transmission rate of at least 65±5, especially 65±2 g/(m².24 hours) at 12 °C and 85% relative humidity.

### The optional frame

The optional frame is preferably made of one or more materials selected from the group consisting of metal, plastic, paper, cardboard and wood. Especially favourably, at least 50 wt.% of the frame is provided as plastic, paper, cardboard or wood. Optionally, the material from which the frame is made contains perforations or holes. Said perforations or holes preferably have a diameter of *ca.* 0.01-50 mm, more preferably of *ca.* 0.1 - 5 mm. In an embodiment, the frame is made of wood.

However, the frame may in an embodiment also be porous, such as mirco porous or meso porous. Especially, such mirco porous or meso porous frame has a water vapour transmission rate of at least 5 g/(m².24 hours) at 12 °C and 85% relative humidity, even more preferably at least 10 g/(m².24 hours), such as at least 50 g/(m².24 hours), especially at least 100 g/(m².24 hours), such as at least 300 g/(m².24 hours), even more especially at least 1000 g/(m².24 hours), with the frame being in contact with the edge in the range of 1-80%, especially 10-80% of the surface of the edge. The dimensions, especially diameter of such micro or meso pore perforations may for instance be selected from the range of 0.5-50 nm.

Hence, the perforations or holes of the frame may in general have a diameter of 0.5 nm-50 mm, such as 1 nm -5 mm. Hence, the frame may in embodiment comprise perforation, having diameters in the range of 0.5 nm - 50 mm.

The perforations may also comprise slits or other type of openings. The length(s) and width(s) of such perforations may also be *ca.* 0.01-50 mm, more preferably of *ca.* 0.1-5 mm. Especially, the area of such perforation(s) is selected from the range of 0.1 mm² - 10 cm², such as 0.5 mm² - 2 cm².

The frame may essentially consist of rigid material. However, the frame may in an embodiment also be flexible. For instance, in an embodiment, the frame is a belt.

It is particularly preferred that the frame comprises or more preferably consists of heat sterilisable material. The heat sterilisable material is preferably defined as a material which does not melt at a temperature of 120 °C or less. The heat sterilisable material is preferably a heat sterilisable plastic or a metal such as iron or steel, especially stainless steel. Heat sterilisable plastics are known to the skilled person. and may be selected as, for example, nylon, polyethylene, polypropylene, poly(vinyl chloride), an epoxy-based plastic or a mixture thereof.

In an embodiment, the frame is connected to or forms part of the (preferably wooden) panel or board on which the cheese resides during ripening. The frame is preferably externally applied to the foil-packaged cheese as a separate element. However the frame may also form an integral part of the cheese-ripening foil, for example in the form of a reinforcing plastic strip.

If the foil-packaged cheese is provided as an essentially block-shaped cheese, it is preferred that the frame is embodied as a square or rectangular-shaped support material surrounding the edge of the cheese, for example as shown in Figure 1(a-d).

The frame F may surround at least part of the edge (E, see figures 1a-1d) of the cheese. This indicates that the frame may in an embodiment entirely surround the edge, i.e. the circumferential length of the frame (in the embodiment of figure 1d this circumferential length is the length of f1+f2+f3+f4) may substantially be equal to the circumferential length of the edge (where the frame is applied) (in figure 1b this circumferential length of the edge is the length e1+e2+e3+e4). This may in an embodiment also indicate that the frame surrounds a substantial part of the circumferential length of the edge. For instance, the frame may have an opening (for instance a U-shaped frame). The frame, or elements thereof, may also be part of a larger structure. The cheese (i.e. the foil-packaged cheese) is preferably surrounded by the frame over at least about 80 % of the total circumferential length of the edge (i.e. at least about 80% of the sum of 2 x L + 2 x b), especially at least about 90%. In a specific embodiment, the frame surrounds the edge over the total circumferential length of the edge (figures 1c and 1d schematically depict such embodiment wherein the cheese is surrounded by the frame over 100 % of the total circumferential length of the edge). The term circumferential length relates to the circumference of a cheese, which may especially have a cylindrical shape or which may in a specific embodiment be essentially block shaped, or which may have another shape.

In an embodiment, the frame may substantially surround the entire height of the edge height (in the embodiment of figure 1a height h), but may in an embodiment also surround only part of the height of the edge, such as for instance schematically depicted in figure 1c, where the height of the frame F is smaller than the height of the edge E. Preferably, the frame is in contact with the edge in the order of 1-100%, especially 5-100% of the surface of the edge, such as in the range of 10-80%, like 15-70%, such as 20-60%, especially 20-50%. In the embodiment wherein the frame is in contact with 100% of the edge, i.e. substantially the whole edge between the first and second surface is in contact with the frame. Especially when the frame is of porous material, a low contact percentage with the edge may be possible, like below 20%, or even below 10% (of the surface of the edge). When there is a high contact percentage with the edge, such as equal to or larger than 20% (of the surface of the edge), such as above 40%, the ripening foil and the frame where spatially overlapping, preferably together have a water vapour transmission rate of at least 5 g/(m².24 hours) at 12 °C and 85% relative humidity.

Hence, in an embodiment the frame may entirely surround the edge (so to say 100% of the edge), but only have contact with 80% or less with the edge, due to the presence of perforations or holes in the frame. Hence, for instance the frame may surround the edge for 100% or less, such as 30-100%, such as 50-100% (of the surface of the edge) (especially for the perforated frame), and have contact with the edge of 1-100%, especially 1-80%, such as 10-80% (of the surface of the edge).

The phrase "wherein the frame is in contact with the edge" and similar phrases indicates that the frame is in contact with the edge of the foil-packaged cheese. The term "diameter" may also refer to non-circular shaped cross-sections of holes or perforations. In such instance, the term "diameter" may refer to the effective diameter (i.e. using the area of the cross-section and define this area as an area of a circle and determine the diameter thereof).
In an embodiment, the frame is in contact with part of the first face and/or part of the second surface in the order of not more than about 70% of the total surface area of the first and/or second surfaces, respectively, such as in the range of 0-60%, especially in the range of about 0-10%. Hence, the frame may be in contact with part of the first face and/or part of the second surface.

In a preferred embodiment, the frame comprises elements which are connectable by (releasable) fastening means, such as a belt or a clip. To provide the frame, such elements may be assembled by connecting with the fastening means. Accordingly, the foil-packaged cheese may be surrounded by the frame more easily. With one or more releasable fastening means, the frame can be conveniently removed after the cheese has obtained a desired ripening time. For instance, referring to figure Id, the elements f1, f2, f3 and f4 may be separate elements that are joined together with (releasable) fastening means.

In an embodiment, the frame may be further in contact with the first face and/or the second face of the foil-packaged cheese. Accordingly, the cheese may be even better protected against mechanical damage. It is preferred, however, that the frame does not completely block moisture evaporation from the cheese. This may conveniently be achieved for example by ensuring that the surface of the frame being in contact with the edge is in the order of 1-80%, such as 10-80%, like 20-50%, of the surface of the edge. The frame may be provided with perforations or holes as indicated above. In such embodiment, the edge may be surrounded by the frame over its total circumferential length (and optionally also its total height) whereas the area of the edge being in contact with the frame is (substantially) lower than 100% of the total area of the edge. The term "surround" and derivatives do include embodiments wherein the foil-packaged cheese has a substantially cylindrical shape, wherein the frame surrounds at least part of the cylindrical edge and embodiments wherein the foil-packaged cheese has a block-shaped shape, wherein the frame surrounds at least part of the rectangular edge of the foil-packaged cheese.

### Ripening conditions

The foil-packaged cheese is preferably ripened under conditions of controlled relative humidity and temperature (see also above). The relative humidity preferably ranges between 20-95%. It is especially preferred that the relative humidity ranges between 75 and 90%. Preferably, the air near the foil-packaged cheese is displaced at a rate of 0.01 - 5 m/s, more preferably at a rate of 0.05 - 3 m/s. The temperature preferably ranges between 6-25 °C. In an especially preferred embodiment, the temperature ranges between 11 and 20 °C during ripening. The conditions together with the water vapour transmission rate of the cheese-ripening foil are especially preferably chosen such that during ripening in (c.) the total amount of moisture which is allowed to evaporate from the foil-packaged cheese is 0.5 - 20 wt.%, more preferably 1-15 wt.% relative to the weight of the foil-packaged cheese provided in (b.). The ripening time may be in the range of about 28 days or longer, and in general equal to or less than about 2 years, preferably equal to or less than about 1 year, such as bout 3 months.

Preferably, during ripening, the foil-packaged cheese is allowed to rest on any one of its first or second face. Alternatively or more preferably additionally, during ripening, the foil-packaged cheese is turned upside-down at least once. Accordingly, an even moisture evaporation can be obtained from the first face and the second face. As an additional advantage, for brined cheeses, turning the foil-packaged cheese upside-down at least once will promote an even distribution of the brine within each foil-packaged cheese during ripening. Hence, in a preferred embodiment, the cheeses are individually ripened and are not in contact with other cheeses. It is especially preferred that ripening is realized under conditions wherein each cheese is individually placed on (wooden) shelves and wherein there is essentially no contact between the cheeses. Under these conditions of so-called "individual ripening", adequate moisture evaporation from each cheese can be achieved.

### Further embodiments of the method

After the foil-packaged cheese has been ripened for a desired time, the frame is preferably removed. Alternatively or more preferably additionally, after the foil-packaged cheese has been ripened for a desired time, the cheese-ripening foil is removed.

In case both the frame and the cheese-ripening foil are removed, the "naked" cheese thus obtained is preferably further packaged in an essentially gas- and water-impermeable foil and/or is provided with a layer of a cheese coating or cheese wax. If it is further packaged in an essentially gas- and water-impermeable foil, it may be stored, preferably with cooling to below 7 °C, without further ripening and/or evaporative weight loss to occur. Accordingly, cheese may be stored until necessary and keep its desired "ripening age", which is an important logistical advantage. Similar advantage may be obtained if the naked cheese is provided with a layer of cheese wax, preferably by dipping. If the naked cheese is provided with one or more layers of a water-borne cheese coating composition, which preferably comprises an emulsion (co)polymer, the cheese obtains the appearance of a traditionally natural ripened cheese, which may be advantageous for some applications.

In case both only the frame is removed, the ripened foil-packaged cheese thus obtained may also preferably be further packaged in an essentially gas- and water-impermeable foil or may be provided with a layer of a cheese coating or cheese wax. Comparable advantages may be obtained, especially for further packaging in the essentially gas- and water-impermeable foil or providing the layer of cheese wax.

After removing the foil and the frame, the cheese preferably comprises an outer rind and an interior cheese mass, wherein the colour of the outer rind associated with the first or the second face is darker than the colour of the interior cheese mass. This phenomenon, commonly associated with natural ripened cheeses, is known to the skilled person as a "drying rind".

The cheese provided in (a.) of the method according to the invention and/or the ripened foil-packaged cheese obtainable thereby preferably comprise at least one strain of *Lactococcus lactis* spp. *lactis* and at least one strain of *Lactococcus lactis* spp. *cremoris.* Even more preferably, the cheese further comprises a strain of *Lactococcus lactis* spp. *lactis* biovar. *diacetylactis* and/or a strain of *Leuconostoc.* Accordingly, a semi-hard cheese having a typical Gouda flavour may be favourably obtained.

### Yet further embodiments

A disadvantage of traditional foil-ripening may be that the development of a typical cheese flavour and consistency may lag, especially as compared with the characteristics of a "natural ripened" (coated) cheese such as described in for example EP1537785.

In the process according to WO2009047332, the cheeses are preferably not stacked during ripening as in the traditional foil-ripening process. In a stacked arrangement, moisture will not evaporate from each foil-packaged cheese (at least to a comparable degree amongst different cheeses). Instead it is preferred that in the process of WO2009047332, during ripening at least part (preferably at least 25%, more preferably at least 40%, most preferably at least 60%) of the surface of the foil-packaged cheese is exposed to an atmosphere having a relative humidity of less than 100%. It is especially preferred that ripening is realized under conditions wherein each cheese is individually placed on (wooden) shelves and wherein there is essentially no contact between the cheeses. Under these conditions of so-called "individual ripening", adequate moisture evaporation from each cheese can be achieved.

However, it has been observed that under conditions of "individual ripening" of foil-packaged cheeses, the cheeses tend to lose their original shape in time. In particular, they tend to flatten in a direction parallel to the force of gravity, and to expand in a direction perpendicular to the force of gravity. This shape loss, which increases with increasing ripening time, is highly undesirable since many industrial apparati, forms of packaging etc. used in cutting, slicing and/or packaging the foil-ripened cheese, rely on standardised dimensions thereof which need to be met within tight limits. Furthermore, said shape loss of the cheese may generally lead to unwanted cheese loss occurring during cutting or slicing of the cheese.

In order to obviate the disadvantage of the process according to WO2009047322 and/or to at least diminish shape-loss of foil-packaged cheese during (individual) ripening, the present invention provides a method for foil-ripening a cheese comprising:
a. providing a cheese having an edge, a first face and a second face;
b. packaging said cheese in a closed cheese-ripening foil having a water vapour transmission rate of preferably at least 1, even more especially at least 5 g/(m².24 hours) at 12 °C and 85% relative humidity, and having a oxygen transmission rate of preferably at most 100 cm³/m².24 hours.atm; and
c. ripening this foil-packaged cheese wherein during ripening moisture is allowed to evaporate from said cheese, wherein the ripening is optionally in the presence of a frame which surrounds at least part of the edge of said cheese, wherein when the ripening is in the presence of the frame, preferably the frame is in contact with the edge in the range of 1-80% of the surface of the edge, especially in the range of 10-80% of the surface of the edge.

Especially, the present invention provides a method for foil-ripening a cheese comprising:
a. providing a cheese having an edge, a first face and a second face;
b. packaging said cheese in a closed cheese-ripening foil having a water vapour transmission rate of at least 1, even more especially at least 5 g/(m².24 hours) at 12 °C and 85% relative humidity; and
c. ripening this foil-packaged cheese in the presence of a frame which surrounds at least part of the edge of said cheese, wherein the frame is in contact with the edge in the range of 1-80%, especially 10-80% of the surface of the edge, and wherein during ripening moisture is allowed to evaporate from said cheese.
The water vapour transmission rate of the cheese-ripening foil is preferably measured according to ASTM E96B cup test at 12 °C and against 85% relative humidity (the relative humidity within the cup is 100%).

In an embodiment, the cheese has a flat-cylindrical shape which may correspond to that of a (Gouda) cheese wheel. More preferably, the cheese is an essentially block shaped cheese. It is further preferred that the block-shaped cheese has a length (L), a width (b) and a height (h), the height preferably being smaller than the length and the width. Then, the dimensions of each of the first face and the second face are essentially provided by the length and the width of said cheese, and the edge is essentially described by the remaining surface area residing in between the first and the second face. In a further preferred example of an essentially block-shaped cheese, length L = 20-40 cm, width b = 20-70 cm and height h = 5-15 cm. The essentially block-shaped cheese is preferably a so-called Euroblock-cheese, having approximate dimensions length L = 30 cm, width b = 50 cm, height h = 10 cm. In an embodiment, the cheese may be substantially spherical, with small substantially flat first and second faces, such as an Edam type of cheese.

The invention also provides a foil-packaged cheese (of which the edge is) at least partially surrounded by a frame, wherein the foil has a water vapour transmission rate of at least 5 g/(m².24 hours) at 12 °C and 85% relative humidity. It is preferred that said foil-packaged cheese is obtainable according to the method of the invention. The invention also provides the cheese *per se,* obtainable after the method of foil-ripening.

The cheese-ripening foil. The present invention also provides the cheese-ripening foil employed in the method *per se.* Preferably, the cheese-ripening foil is provided as a monolithic film. The monolithic film may be provided as a single layer foil or as a multilayer foil. As used herein, a monolithic film is a film not containing holes, perforations, pores or micro-pores that provide a direct pathway for water molecules to flow through. The monolithic film is in an embodiment preferably defined as in WO2009047332. However, the cheese-ripening film may also be provided as a perforated or (micro-) porous film or as a multilayer foil wherein optionally one or more of the layers are present as a perforated or (micro)porous film. Herein, the terms "perforated film" and "microporous film" are considered clear to the skilled person; these terms are preferably defined as in WO2009047332.

The water vapour transmission rate of the cheese-ripening foil is preferably at least 10 g/(m².24 hours), more preferably at least 15 g/(m².24 hours) at 12 °C and 85% relative humidity. Accordingly, even better flavour and/or texture properties can be obtained. Alternatively or more preferably additionally, the water vapour transmission rate of the cheese-ripening foil is preferably at most 300 g/(m².24 hours), more preferably at most 200 g/(m².24 hours), even more preferably at most 150 g/(m².24 hours) at 12 °C and 85% relative humidity. If the water vapour permeability is too high, efficiency of the cheese making process may be reduced as result of excessive moisture loss during ripening, whilst no noticeable further quality gain of the ripened cheese will be achieved.

In order to be able to function as a packaging, the cheese-ripening foil preferably possesses sufficient mechanical properties such as for example puncture resistance and tear strength. In view of this, the thickness of the cheese-ripening foil is preferably at least 15 µm, more preferably at least 25 µm. The thickness of the cheese-ripening foil is preferably less than 200 µm, more preferably less than 100 µm, most preferably less than 75 µm. If the ripening foil is too thick, sealing may take too much time.
In an embodiment, the cheese-ripening foil has an oxygen transmission rate of at most 100 cm³/m².24 hours.atm, more preferably of at most 50 cm³/m².24 hours.atm, most preferably of at most 20 cm³/m².24 hours.atm or even of at most 1 cm³/m².24 hours.atm. Herein, oxygen transmission rate is preferably measured according to ASTM standard D3985 at 12 °C and 85% relative humidity. Low oxygen permeability is advantageous for preventing mould growth on the surface of the cheese during ripening. Low oxygen permeability values of at most 100 cm³/m².24 hours.atm are preferably obtained when the cheese-ripening foil is provided as a monolithic film.

The cheese-ripening foil is preferably embodied as a mono- or multilayer foil comprising a polycondensation polymer. Preferred examples of monolayer cheese-ripening foils are for example provided in Table 1 of WO2009047332 as packaging materials 2 (Akulon®), 3 and 4 (Akulon®/Arnitel® blends) and 5(Arnitel®). However a number of alternative foil materials may be used.

### Further embodiments of the cheese

The cheese, which is preferably obtainable according to the method of the invention, is preferably a semi-hard or hard cheese (see also above).

In yet a further embodiment, the cheese does not comprise propionibacteria, which may for instance be the case for Gouda or Edam. In another embodiment, the cheese, preferably Gouda-type cheese, further comprises a strain of *Lactobacillus helveticus.* Also this cheese is preferably ripened at relatively high temperatures of between 14-25 °C.

After removing the foil and the frame, the cheese preferably comprises a drying rind which is visibly present near one or both of its faces and/or the edge. That is, the cheese preferably comprises an outer rind and an interior cheese mass, wherein the colour of the outer rind associated with the first or the second face is preferably darker than the colour of the interior cheese mass.

### Further embodiments of the frame

The frame (when applied) is preferably made of one or more materials selected from the group consisting of metal, plastic, paper, cardboard and wood (see also above).

### Further ripening conditions

The foil-packaged cheese is preferably ripened under conditions of controlled relative humidity and temperature (see also above). The relative humidity preferably ranges between 20-95%. It is especially preferred that the relative humidity ranges between 75 and 90%. However, if the water vapour transmission rate of the cheese ripening foil is between 1 and 20, especially between 1 and 10 g/(m2.24 hours) at 12 °C and 85% relative humidity, it is especially preferred that the relative humidity ranges between 50 and 85% or between 50 and 80%. Accordingly evaporative weight loss is easier to control.

### Others

A frame is preferred, but not absolutely necessary. In a specific embodiment, no frame is applied. Especially, the invention provides a method (as defined above and as defined in the claims) for foil-ripening a cheese comprising:
(a) providing a cheese having an edge, a first face and a second face;
(b) packaging said cheese in a closed cheese-ripening foil having a water vapour transmission rate of at least 5 g/(m².24 hours) at 12 °C and 85% relative humidity, having an oxygen transmission rate of ≤100, such as < 100 cm³/m².24 hours.atm and preferably having a tensile modulus in the range of 150-400 MPa at 12 °C and 85% relative humidity; and
(c) ripening the foil-packaged cheese wherein during ripening moisture is allowed to evaporate from said cheese, wherein the ripening is in the absence of a frame, especially in the absence of a frame which surrounds at least part of the edge of said cheese, even more especially wherein the ripening is in the absence of a frame which is in contact with the edge in the range of 1-80% of the surface of the edge, especially in the range of 10-80% of the surface of the edge.

Likewise, a foil-packaged cheese is provided, without a frame surrounding the foil-packaged cheese, especially without a frame which surrounds at least part of the edge of said cheese, more especially in the absence of a frame which is in contact with the edge in the range of 1-80% of the surface of the edge, especially in the range of 10-80% of the surface of the edge.

However, the application of a frame is preferred, especially when applying a cheese-ripening foil having a tensile modulus in the range of 150-400 MPa at 12 °C and 85% relative humidity, as the use of the frame (as also described above) may be beneficial for the maintenance of the shape of the cheese (during ripening and/or storage), especially for such relatively flexible foil.

In view of European patent application 09179654.0, in an embodiment, a foil having a thickness of 50 µm is disclaimed. In the same respect, in yet another embodiment, a foil having an oxygen transmission rate (OTR) of 750 ml.m⁻².bar⁻¹.24h⁻¹ at 12 °C and 85% relative humidity is disclaimed. Likewise, in yet another embodiment, a foil having a water vapour transmission rate (WVTR) of 18 g.m⁻².24h⁻¹ at 12 °C and against an atmosphere of 85% relative humidity is disclaimed. Especially, in view of European patent application 09179654.0, in an embodiment a foil (especially a polyester urethane copolymer) having a thickness of 50 µm, an oxygen transmission rate (OTR) of 750 ml.m⁻².bar⁻¹.24h⁻¹ at 12 °C and 85% relative humidity, and having a water vapour transmission rate (WVTR) of 18 g.m⁻².24h⁻¹ at 12 °C and against an atmosphere of 85% relative humidity is disclaimed.

In view of European patent application 09179654.0, in yet a further embodiment, in the method for foil-ripening a cheese, the surface of cheese is not treated with an aqueous suspension comprising 500 ppm of natamycin, such as not treating with an aqueous suspension comprising 450-550 ppm of natamycin.

### EXAMPLES

Embodiments disclosing foils having an OTR higher than 100 cm3/m²/24 hours/atm are not according to the invention.

### Example 1

A block-shaped cheese produced using a so-called LD-starter (*i.e.* comprising one or more strains of each of *Lactococcus lactis* spp. *lactis, Lactococcus lactis* spp. *cremoris, Lactococcus lactis* spp. *lactis* biovar. *diacetylactis* and *Leuconostoc*) was divided in 4 parts each measuring 15cm(w) x 11cm(h) x 25cm(l). The cheese was packaged in a closed cheese-ripening foil made of a commercially available polyester urethane copolymer. Before packaging the cheese in said foil, its surface was treated with an aqueous suspension comprising 500 ppm of natamycin.
The foil had a thickness of 50 µm. The oxygen transmission rate (OTR) of the foil was determined as 750 ml.m⁻².bar⁻¹.24h⁻¹ at 12 °C and 85% relative humidity. The water vapour transmission rate (WVTR) was determined as 18 g.m⁻².24h⁻¹ at 12 °C and against an atmosphere of 85% relative humidity.
OTR was measured according to ASTM standard D3985 using Mocon equipment. WVTR was measured according to the ASTM E96B cup test at 12 °C and against 85% relative humidity (the relative humidity within the cup is 100%).
The cheeses were placed on a wooden shelf, leaving sufficient space (between 10 and 50 cm) between them. The foil-packaged cheeses were allowed to ripen under controlled conditions of 12 °C and 83% relative humidity. After 60 days, the weight loss from the cheeses - due to evaporation of moisture - was on average 4 wt.%. By comparison, similarly sized cheese blocks which were "naturally ripened" during the same period of 60 days and under the same conditions lost approx. 12 wt.% of their original weight; the natural ripening process comprised 15 half-sided treatments with a water-borne cheese-coating composition (Ceska WL) each half-sided treatment followed by turning of the cheese upside-down.

The foil-packaged cheeses were observed to undergo shape-loss in time, especially the cheeses became flattened.

Said shape-loss can be prevented or at least diminished by ripening the foil-packaged cheeses in the presence of a frame. The frame can preferably be made of wood or plastic which may have a thickness of between 1 and 10 mm. The frame has interior dimensions of approx. 15(L)x25(b) cm (rectangular-shaped) and tightly surrounds the edge of the cheese (*cf.* Figure 1 for a further illustration).

### Example 2: Foil examples

Several foils were tested, with different layer structures and types of layers. Further, the cheeses were evaluated.

**Table 1: some examples of some applied foils**

| **Code** | **Thickness, [µm]** | **Foil structure** |
|---|---|---|
| 1912 | 55 | Ecoflex - starch blend with 50% starch-Ecoflex, 10-80-10 % |
| 1913 | 69 | Ecoflex - starch blend with 50% starch - Ecoflex, 10-80-10 % |
| 1914 | 50 | Ecoflex - starch blend with 50% starch - Ecoflex, 10-80-10 % |
| 1915 | 52 | Ecoflex - starch blend with 50% starch - Ecoflex, 20-60-20 % |
| 1916 | 64 | Ecoflex - starch blend with 50% starch - Ecoflex, 20-60-20 % |
| 1917 | 67 | Ecoflex - starch blend with 50% starch - Ecoflex, 30-40-30 % |
| 1918 | 50 | Ecoflex - starch blend with 50% starch - Ecoflex, 20-60-20 % |
| 1919 | 52 | Ecoflex - Enfresin - Ecoflex, 15-70-15 % |
| 1920 | 58 | Ecoflex - Enfresin - Ecoflex, 15-70-15 % |
| 1921 | 56 | Ecoflex - PEBAX 6100MV - Ecoflex, 15-70-15 % |
| 1922 | 67 | Ecoflex - PEBAX 6100MV - Ecoflex, 15-70-15 % |

Ecoflex® is a biodegradable, statistical, aliphatic-aromatic co-polyester of the monomers 1,4-butanediol, adipic acid a terephthalic acid. Enfresin® is a biodegradable polyester urethane copolymer. PEBAX® is a polyester block amide. Those polymers are commercially obtainable.

**Table 2: properties of some foils per se, OTR and CTR in [ml/m².bar.day] at 12°C and 85%RH and WVTR in [g/m².day] at 12°C, 100% RH inside and 85%RH outside**

| **Code** | **Thickness, [µm]** | **OTR** | **CTR** | **WVTR** |
|---|---|---|---|---|
| 1914 | 50 | 849 | 9329 | 13,5 |
| 1915 | 50 | 882 | 9488 | 15,2 |
| 1918 | 50 | 918 | 9653 | 17,5 |
| 1919 | 50 | 810 | 8149 | 19,7 |
| 1921 | 50 | 1000 | 12388 | 55,3 |
| reference foil 1 | 50 | <100 | <500 | 0,5 |
| Traditionally ripened | - | - | - | - |

The traditionally (naturally) ripened cheese was prepared by applying to the surface facing upwards and to the edges of the cheese a plastics coating, i.e. Ceska 200.03.45, repeatedly at time intervals of 24-96h followed by turning the cheese upside down, according to a coating protocol for obtaining naturally ripened Gouda-type cheese as known to the skilled person.

**Table 3: thickness and tensile strength of some applied foils.**

| **Code** | **Thickness (µm)** | **Tensile modulus (E-modulus) (MPa),** experimental error indicated in square brackets |
|---|---|---|
| PE | 61 | 235 [33] |
| 1913 | 69 | 19 [14] |
| 1914 | 50 | 34 [5] |
| 1915 | 52 | 49 [19] |
| 1916 | 64 | 62 [5] |
| 1917 | 67 | 80 [23] |
| 1918 | 50 | 61 [32] |
| 1919 | 52 | 53 [21] |
| 1920 | 58 | 61 [21] |
| 1921 | 56 | 206 [18] |
| 1922 | 67 | 190 [20] |
| reference foil 1 | 57 | 256 |

Further to Table 3, for comparative reasons E-moduli of the materials mentioned in WO2009047332, Table 1 have also been determined. Thus a foil entirely composed of Arnitel VT3108 has an E-modulus of well below 150 MPa and a foil entirely composed of Akulon F-136-E2 or comprising 85/15 Akulon/Arnitel blends as disclosed in WO2009047332 has an E-modulus in the order of 500 MPa (foil thickness between 30 and 50 micron; E-moduli determined at 12 °C and 85% relative humidity).

The taste and texture of cheeses 1914 and 1921 were best. The texture is firm, but also smooth ("smedig"), and a very well balanced taste. The reference foil cheese had a sticky texture and had a butter like and acid taste. Naturally ripened cheeses were considered too salty and dry. The ripening test shows that a too low water vapour transmission rate (reference foil 1) is not desired. It further seems that a water vapour transmission rate in the range of 10-60 g/m².day at 12°C at 85% RH may provide good cheeses.

The tear resistance (of all foils 1914 - 1921) was determined between 10000 - 20000 cN/mm in both extrusion direction and expansion direction; the tear resistance was determined according to the tear test (ISO 6383/2) protocol, see below.

In the examples, the strain rates as defined above have been applied.

### Example 3: Examples including flavor tests

Cheeses used for coating by CSK were 4 kg blocks obtained by cutting so called "Euroblok" cheeses, weight 16 kg, into four quarters. The "Euroblok" cheeses were all produced on the same day from the same batch of milk according to a protocol for Gouda cheese production. The 4 kg blocks were provided with the materials according to table 2; the traditionally (naturally) ripened cheese was prepared by applying to the surface facing upwards and to the edges of the cheese a plastics coating, i.e. Ceska 200.03.45, repeatedly at time intervals of 24-96h followed by turning the cheese upside down, according to a coating protocol for obtaining naturally ripened Gouda-type cheese as known to the skilled person. Experiments were performed in triplicate. The materials (i.e. foils or coating) applied and their properties are shown in Table 2 (note that table 2 gives the properties of the foils per se related to internally comparable thicknesses; the thickness of the coatings applied may be different, see for instance table 3).

The treated cheeses were ripened at for 11 weeks at standard conditions for Gouda cheese. Three good quality cheeses (no mold growth on the surface) were selected from each (coating) variety. Sector samples were cooled (4°C) and used for analysis. For this, the cheese samples delivered were grated and stored at -20°C until analysis. The foil ripened cheese samples were completely grated, from the other cheeses the outer 2 mm (coating) layer was removed prior to grating.

Gas chromatography-Mass Spectrometry (GCMS) was performed on a TRACE GC/MS DSQ GCTQ8 (FactorFour VF-1ms 60m x 0.25mm Df=1µ column) with 25 min runtime. Headspace sampling was done by solid-phase micro extraction (SPME) at 60°C and analysis was performed on 3 g samples of grated mixed material. Compounds detected were identified using the MS in both SIR and full scan mode. After identification of peaks correspond ding to key-aroma compounds, their areas in all the chromatograms were determined using Xcalibur software. Peak areas generated were used for data analysis ("targeted" analysis) as well as the total (of all compounds) information in the chromatograms.

Two metabolomics approaches were used to characterize cheese coatings: (i) targeted metabolomics: in GCMS compound profiles of the cheeses with various coatings compounds known to be associated with cheese flavour were identified and quantified; (ii) untargeted metabolomics: compound fragment masses that are different between one or more cheese coatings are determined using the Random Forest machine learning algorithm. Next, these compound fragment masses are linked to compounds. In the comparison of both approaches the question was whether the untargeted approach could yield the compounds that are in the targeted compound list and if additional "unexpected" compounds that differ between the cheese coatings were found. For each of the 21 samples a GCMS spectrum has been generated. The GCMS spectra have been aligned using Metalign. MS scans were obtained during sampling the GC effluent in time. The data consists of peak heights for each combination of mass and scan number. These data have not been normalized or scaled before applying untargeted metabolomics. For targeted analysis GCMS spectra were not aligned. Based both on targeted and untargeted analysis a table was constructed with volatile flavour compounds. All individual (triplicate) data were used, and no averages were taken. All data were analyzed using hierarchical clustering with average linkage clustering as agglomeration rule. The measurements for the different metabolites were on different scales. Therefore, data for each metabolite was normalized by generating z-scores.

31 volatile flavour compounds (metabolites) potentially relevant for Gouda-type cheese flavour were identified by GCMS during targeted and untargeted analysis and relative peak areas were determined. The compounds semi-quantified are listed: ethanol; 2,3-butanediol*; acetone; ethylbutanoate; 2-methylpropanal; 3-methylbutanoic acid*; diacetyl*; 2-methylbutanoic acid*; 3-methyl-2-butanone; 2-heptanone; 2-butanone*; benzaldehyde; ethylacetate; hexanoic acid*; acetic acid; hexanoic acid ethyl ester; 3-methylbutanal; 2-nonanone*; 2-pentanone; octanoic acid*; pentanal; 2-undecanone; acetoine; 1-hexanol#; 3-methylbutanol*; phenylacetaldehyde#; 2-methylpropanoic acid*; butyric acid; nonanoic acid#; and decanoic acid#, with * compounds resulting from the targeted and untargeted metabolomics, and with # compounds only found during untargeted metabolomics. Of especially interest are 2-methylpropanoic acid, 2-methylbutanoic acid, 3-methylbutanoic acid, butyric acid, 2-methylpropanal, hexanoic acid, octanoic acid, and decanoic acid, more especially 2-methylbutanoic acid, 3-methylbutanoic acid, and octanoic acid.
Comparison of the compounds resulting from the untargeted metabolomics approach with those from targeted analysis showed that the untargeted approach yielded only few additional compounds that differed between coatings (marked with # above). The untargeted approach did yield most of the compounds in the targeted list. A reason for certain compounds missing in the untargeted approach versus targeted approach could be due to e.g. noise in the GC chromatograms.

In summary, it appeared that the metabolite pattern with of foils with high OTR (>100 ml/m².bar.day) are in more agreement with traditionally ripened Gouda cheese than foils with a too low OTR (reference foil ripened).

**Table 4: properties of some foils, assuming a thickness of 50 µm.**

| | **Thickness (µm)** | **OTR [ml/m².b ar.day]** | **CTR [ml/m².b ar.day]** | **WVTR [g/m².d ay]** | **Tensile strength (E-modulus) [Mpa]** |
|---|---|---|---|---|---|
| Akulon/Ecoflex/enfresin/ ecoflex/ Akulon (15/10/50/10/15) | 50 | 182 | 461 | 22 | 199 |
| Bioflex 219/enfresin/bioflex 219 (/PLA) (15-70-15) | 50 | 665 | 7391 | 14.5 | 158 |
| Ecoflex/Akulon/ Ecoflex/ (46-8-46) | 50 | 72 | 1421 | 70 | 242 |
| Ecoflex/Pebax/Ecoflex (30-40-30) | 50 | 936 | 9515 | 119 | 207 |

| | | | | | |
|---|---|---|---|---|---|
| Note that the Ecoflex/Akulon/ Ecoflex/ (46-8-46) foil has a low OTR. To provide a higher OTR value, the thickness of the Akulon layer may be decreased. | | | | | |

### Further examples

### Methods

Foils are analysed on several parameters under the cheese ripening conditions: 12°C and 85% RH). The parameters are listed below (the measurement descriptions are specified in the next paragraphs):
- Mechanical properties (E-Modulus, Strength test, Elasticity test, Tear test and Impact test)
- Permeability properties (Oxygen Transmission Rate (OTR), Carbon dioxide Transmission Rate (CTR) and Water Vapour Transmission Rate (WVTR))

### Foil production

Foils are blown on a standard co-extrusion blown film section. The blower is fed with two extruders (BFA Extruder 30-25) and can produce films of different thickness and dimension thanks to its take off and Winder section. With this experimental condition, symmetric multi-layers foil following the structure A-B-A is blown.

### Gas diffusivity system

The gas permeability of the foils was analysed according to two methods:

### - Diffusion pot (for high diffusivity properties):

The foil is clamped between 2 gas chambers where the flow, gas concentrations and the pressure are controlled and measured. The permeability of the foil to oxygen and carbon dioxide molecules is determined by following the gas concentrations inside the bottom chamber. This system is placed inside a climate chamber where the temperature and the relative humidity are controlled. For this experiment, the same temperature and relative humidity that one's observed inside the cheese ripening cells are applied (respectively 12°C and 85% RH). The top chamber is continuously flushed with humidified (85%) atmospheric air (21% O₂, 0.4% CO₂ and 78% N₂). Several time during the week, the gas composition and the pressure of the bottom pot is measured and recorded thanks respectively to Dansensor Checkmate II and GE Sensing (Druck, 0.01 mbar accuracy). The oxygen (OTR) and carbon dioxide (CTR) transmission rate is calculated by a linear regression of the logarithm difference of the partial pressure between the 2 pots versus time. The detection limit of this measurement equipment is limited to foil with an OTR value higher than 100mlO₂/m².day.bar. Under this condition, only the foils produced within the option 2 are analysed by using this method.

### - Mocon:

For the foil produced within the option 1 (with OTR < 100mlO₂/m².day.bar), the Mocon equipment (Mocon Oxtran type 2/20 MH) has been used. The oxygen permeability of the foil is measured at 12°C with gas humidified to 85%. The analysis follows the ASTM D3985 requirements.

### Water vapour transmission rate

The water vapour transmission rate is determined according to the ASTM E96B method. PMMA-cups filled up with demi-water are closed with the foils. The complete set up is placed inside a climate chamber where the temperature and the relative humidity are constantly controlled (12°C and 85%). The weight loss of the cup is followed in time during one to two weeks. Knowing the water loss and the area of the foil tested, the WVTR is calculated thanks to a linear regression. The WVTR is expressed in g water/m².day

### Mechanical properties

The mechanical properties of the foils are determined under two storage conditions. Before measuring, the foils are stored minimum one week under the storage conditions: 20°C & 50% relative humidity and 12°C & 85% relative humidity.
The mechanical properties of the foil consist of:
- The E-Modulus, the tensile strength,k the elasticity (strain at break) have been measured according to the ISO 527-3 protocol. The samples used for these measurements were prepared following the recommendations described in the protocol ISO 1184-1985.
   ∘ E-Modulus, [MPA]:
      E-modulus test checks the stiffness of the foil. By experience, the best E-modulus values for cheese ripening foils should be included between 150 and 400 MPa, more preferably between 150 and 250 MPa. In general, the E-modulus has been measured in extrustion direction, unless indicated otherwise.
   ∘ Strength strength (test) (Kracht test), [MPa]:
      Although this parameter is not the most important for ripening foils, it is preferably higher than 15MPa. With this value, rupture of the bag is avoided during the manipulation of the cheese during the packing and ripening processes.
   ∘ Elasticity test [%]:
      The elasticity (test) (strain at break) informs on the capacity of the foil to elongate before breaking. No specific value was for the cheese ripening foil determined.
- Tear test, [cN/mm]
   ∘ In the extrusion direction
   ∘ In the expansion direction
      The tear test (ISO 6383/2 protocol) consists of initiate one tear on the foil and check the force needed to increase the tear. This test is realised in two directions: in the extrusion and the expansion directions of the foil. For foil destined for cheese ripening, the preferred minimal tear test value is established at 4000, more preferably at 10000cN/mm.
- Impact test, [J/mm]
   The impact test (ISO 7765-2 using falling dart equipment) consists of determine the energy needed to perforate the foil when a dart falls from 1 meter on the stretched foil. The ripening cheese foil should be resistant enough to avoid any perforations if the cheese falls on the ground or if it lays on non-smooth wooden shelves. The impact test value is preferably higher than 10J/mm. However this parameter is likely not as important as E-modulus or tear test value.

Task 1: Production and analysis of foils described in the WO2009/047332
Foils similar to those of the above-mentioned patent were made.

Task 2: Production, analysis of improved ripening foils.
Improvements were especially regarding mechanical properties, in particular regarding E-modulus. Also foils with even further reduced OTR were prepared (Option 1) Also foils with relatively high OTR were prepared (Option 2).

### Cheese test

The ripening process is followed during the 12 weeks of ripening. Euroblock cheeses used for the cheese test are of Gouda type cheese. They are produced within the same batch and followed a recipe specially made for ripening within foil. The cheeses are first cut in 4 similar pieces with a dimension of 14x23.5x10cm.

Once the quarter Euroblock cheese is treated with Natamycin or water treatment, it is placed at the bottom of the ripening bag. The open bag is placed inside the vacuum seal machine (Multivac) and is vacuumed until a rest pressure of 20mbar. Before opening the machine, a seal is applied to the top of bag in order to keep the vacuum conditions inside the bag. The package is checked directly after packing and one hour later in order to determine if the cheese are still packed under vacuum. If the bag does not stay in tension on the surface of the cheese, the packing process is repeated.

Before introducing the cheese inside the ripening bags, the cheese is treated with an aqueous Natamycin solution or with a pure water solution. The Natamycin solution inhibits the fungi development on the crust of the cheese. The pure water solution is applied to bring first the same water content on the crust of the cheese in order to be able to compare the two treatments and secondly to facilitate the packing process. Indeed the cheese once wet is slippery and can be easier introduce inside the pre-made ripening bag. The Table 5 resumes the treatments applied to the Euroblock cheese. For each ripening foils, 3 cheeses are first treated with Natamycin solution and 3 with water solution. Foils 2027, 2035 and 2037 were applied to cheeses which were pre-treated uniquely with water and no natamycin. Thanks to this comparative study (Aqueous Natamycin solution versus pure water), it is possible to conclude if the inhibition of fungi growth is due to foil properties or to Natamycin treatment.

**Table 5: Overview of the cheese treatments**

| **Option** | **Foils** | **pre-treatment** | **number of cheese** |
|---|---|---|---|
| Reference 1 | traditional barrier foil type Dixie | With Natamycin | 3 |
| | | With Water | 3 |
| Reference 2 | 1951 | With Natamycin | 3 |
| | | With Water | 3 |
| | | | |
| Option 1 | 2031 | With Natamycin | 3 |
| | | With Water | 3 |
| | | | |
| | | | |
| | 2035 | With Water | 3 |
| Option 2 | 2027 | With Water | 3 |
| | 2028 | With Natamycin | 3 |
| | | With Water | 3 |
| | 2033 | With Natamycin | 3 |
| | | With Water | 3 |
| **Total Cheese packed** | | | **36** |

After packing, the cheeses are coded and the initial weight is measured. Cheeses are placed on wooden shelves inside ripening cells for 6 weeks. Within the ripening cell, the temperature and the relative humidity are constantly controlled to respectively 12°C and 85% relative humidity. Once a week, the cheeses are weighed and turned around carefully to avoid any leakages through the ripening bag. After 70 days of ripening stage, the cheeses are assessed by cheese ripening experts on several criteria:
- Total water loss of the cheese during the ripening stage
- Mould development on the surface of the cheese (between the cheese and the ripening foil)
- Packaging: problem met during the ripening stage as delamination, perforation due to handling of cheese or loss of vacuum properties
- Sensorial evaluation after 10 weeks of ripening condition. (Expert test).

### Task 2:

The task 2 consists on producing the further foils and analysing them. The OTR, CTR, WVTR and the mechanical properties of these foils are determined.

### Description foils produced within task 2

The Table 6 transcribes the properties of the several further foils.

**Table 6: Description, OTR and WVTR results of the further foils tested (D1-D6).**

| **Packaging** | **Material** | | **Oxygen transmission rate OTR (ASTM D3985 at 10C and 85% RH) in cc/m².day.atm** | **Water vapor transmission rate WVTR (ASTM E96B cup test at 10C and 85% RH) in g/m².day** |
|---|---|---|---|---|
| D1 | Reference vacuum bag, polyamide/polyethylene (20µm/80µm) (Comparative experiments) | 100µm | 25 | 0 |
| D2 | Akulon® | 50µm | 9 | 20 |
| D3 | Akulon®/Arnitel® | 50µm | 20 | 30 |
| D4 | Akulon®/Arnitel® | 30µm | 30 | 39 |
| D5 | Arnitel® | 30µm | >1000 | 65 |
| D6 | Plasticoat® AGD 625, 0.05% natamycine | 3 times in 12 days | >1000 | n.a. |

For this comparative experiment, the foils D2, D3, D4 and D5 of the Table 6 were produced and analysed. The Table 7 presents the principal characteristics of the foils.

**Table 7: Composition of the foils produced for the task 2**

| **Test** | **Formula** | **Code** | **Layer profile (%)** | **Thickness film (micron)** | **Comment** |
|---|---|---|---|---|---|
| | | | | | |
| 1947 | | | | 30 | Runs ok. Very flexible film. |
| | 100 % Arnitel⁽¹⁾ | | 100 | | |
| | | | | | |
| | | | | | |
| 1949 | | | | 50 | At the end it runs quite well. Temperature needed was critical. |
| | 100 % Akulon⁽²⁾ | | 100 | | |
| | | | | | |
| | | | | | |
| 1950 | | | | 30 | Runs ok. One line in the film due to contamination. |
| | 15 % Arnitel⁽¹⁾ + 85 % Akulon (dry blend)⁽²⁾ | | 100 | | |
| | | | | | |
| | | | | | |
| 1951 | | | | 50 | Runs ok. One line in the film due to contamination. |
| | 15% Arnitel⁽¹⁾ + 85 % Akulon (dry blend)⁽²⁾ | | 100 | | |
| | | | | | |

| | | | | | |
|---|---|---|---|---|---|
| *⁽¹⁾ Arnitel is a polyester ester material produced by DSM* *⁽²⁾ Akulon is a polyamide and is also produced by DSM* | | | | | |

### OTR, CTR and WVTR

*F*oils D3 and D4 of the Table 6 consist of one homogeneous layer of a mixture of Akulon® and Arnitel®.

**Table 8: OTR and CTR measured with diffusion system. (*: The oxygen permeability is below the detection limit of the diffusion system, these values are only indicative)**

| | | **Thickness** | | **OTR** | | **CTR** | |
|---|---|---|---|---|---|---|---|
| **Material** | **Tem peratur e** | **Avera ge, [µm]** | **St deviatio n** | **Average, [mlO₂/m² .day.bar]** | **St deviati on** | **Average, [mlCO₂/m ².day.bar]** | **St deviati on** |
| 1949 (100% Akulon) | 12°C | 48 | 3 | (15.3)* | 0.6 | 144 | 26 |
| 1947 (100% Arnitel) | 12°C | 32.6 | 3.9 | 7263 | 502 | 71524 | 1874 |
| 1950 (15% Arnitel + 85% Akulon) | 12°C | 32 | 3 | (45)* | 26 | 784 | 49 |
| 1951 (15% Arnitel + 85% Akulon) | 12°C | 48 | 3 | (127)* | 6 | 596 | 33 |

The OTR of the most impermeable foils are below the detection limit of the FBR diffusion system. The results notified with an asterisk in the Table 8 should be considered as indicative values and not as definitive results. The same foils' samples are analysed with the Mocon equipment (and following ASTM D3985). This equipment is more adapted for material with low oxygen transmission rate (< 100mlO₂/m².day.bar).

**Table 9: Oxygen transmission rate measured with Mocon equipment.**

| | | **Thickness** | | **O₂ permeability at 21% O₂** | | **O₂ permeability at 21% O₂ (corrected to 50µm)** | |
|---|---|---|---|---|---|---|---|
| **Material** | **Temper ature** | **Average, [µm]** | **St deviati on** | **Average, [mlO2/m². day.bar]** | **St deviatio n** | **Average, [mlO₂/m². day.bar]** | **St deviatio n** |
| 1949 (Akulon) | 12°C | 5 0.5 | 0.4 | 5.9 | 0.1 | 5.96 | 0.10 |
| 1950 | 12°C | 2 7 | 2 | 15 | 1 | 8.2 | 0.5 |
| 1951 | 12°C | 5 0 | 0 | 7.4 | 0.0 | 7.3 | 0.0 |

The water vapour transmission rate of the commercial foils is resumed in the Table 10.

**Table 10: Water vapor transmission rate measured according method ASTM E96B at 12°C/85% RH**

| | **Thickness** | | **WVTR** | | **WVTR (corrected to 50µm)** | |
|---|---|---|---|---|---|---|
| **Material** | **Average, [µm]** | **St deviatio n** | **Average, [g/m².day ]** | **St deviatio n** | **Average, [g/m².da y]** | **St deviatio n** |
| 1949 (100% Akulon) | 52.7 | 0.9 | 33.3 | 0.1 | 35.1 | 0.1 |
| 1947 (100% Arnitel) | 43.9 | 0.5 | 290.3 | 6.0 | 255.1 | 5.3 |
| 1950 (15% Arnitel + 85% Akulon) 30µm | 30.40 | 0.06 | 70.8 | 0.5 | 43.1 | 0.3 |
| 1951 (15% Arnitel + 85% Akulon) 50µm | 50.1 | 0.3 | 45.8 | 0.2 | 45.9 | 0.2 |

### Mechanical properties

The Table 11 resumes the mechanical properties of the some of the foils. Few conclusions can be drawn from these results:
- Foil 1951 has an excessively high E-modulus values and low resistance to tear test. These results confirm the feedback findings that the foil is too rigid during handling and tears easily

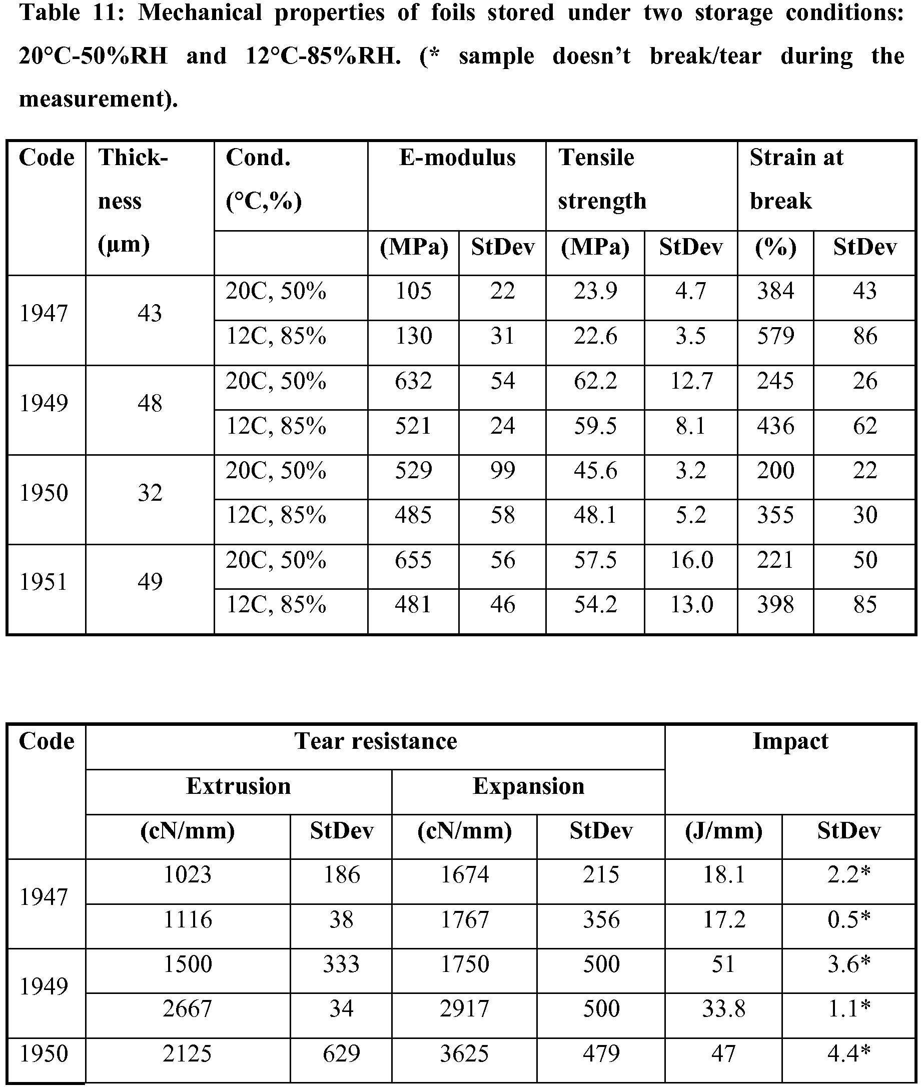

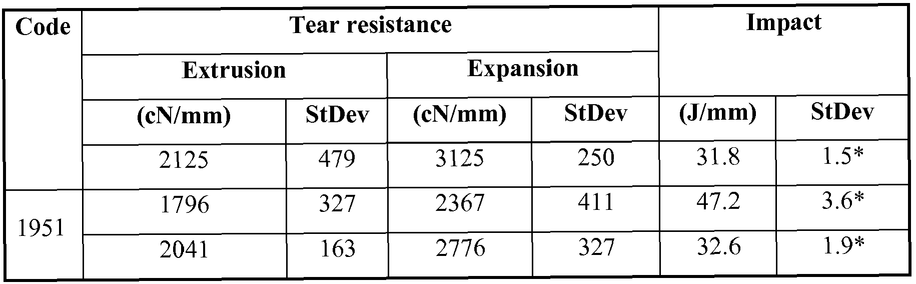

Again, further foils were made (task 3)

Description of the foils and remarks observed during production process:

**Table 12: Composition of the foils produced for the task 3**

| **Test** | **Formula** | **Code** | **Layer profile (%)** | **Comment** |
|---|---|---|---|---|
| 2027 | 47%Eco(20)⁽¹⁾+47%Eco(3)⁽¹⁾+ 4%AB1⁽¹⁾+2%SL1⁽¹⁾ | BASF | 15 | |
| | Enfresin 805⁽⁵⁾ | Sejung | 70 | |
| | 47%Eco(20)⁽¹⁾+47%Eco(3)⁽¹⁾+ 4%AB1⁽¹⁾+2%SL1⁽¹⁾ | BASF | 15 | |
| 2028 | 47%Eco(20)⁽¹⁾+47%Eco(3)⁽¹⁾+ 4%AB1⁽¹⁾+2%SL1⁽¹⁾ | BASF | 15 | Smooth film; runs ok. |
| | Estane 54610⁽³⁾ | Lubrizol | 70 | |
| | 47%Eco(20)⁽¹⁾+47%Eco(3)⁽¹⁾+ 4%AB1⁽¹⁾+2%SL1⁽¹⁾ | BASF | 15 | |
| 2029 | 47%Eco(20)⁽¹⁾+47%Eco(3)⁽¹⁾+ 4%AB1⁽¹⁾+2%SL1⁽¹⁾ | BASF | 20 | Smooth film; film looks somewhat stiffer than 2028; runs ok. |
| | 50 % Pebax MV 6100 SA 01⁽²⁾+50 % Eco(3)⁽¹⁾ | Arkema | 60 | |
| | 47%Eco(20)⁽¹⁾+47%Eco(3)⁽¹⁾+ 4%AB1⁽¹⁾+2%SL1⁽¹⁾ | BASF | 20 | |
| 2030 | 94%Eco(3)⁽¹⁾+4%AB1⁽¹⁾+2%SL1⁽¹⁾ | BASF | 40 | More stiff than 2029, so folds arise; some delamination of layer takes place but still acceptable |
| | 100 % EVAL F 171B⁽⁴⁾ | EVAL | 20 | |
| | 94%Eco(3)⁽¹⁾+4%AB1⁽¹⁾+2%SL1⁽¹⁾ | BASF | 40 | |
| 2031 | 94%Eco(3)⁽¹⁾+4%AB1⁽¹⁾+2%SL1⁽¹⁾ | BASF | 30 | Runs more stable than 2030. Less sensible for delamination. Still some folds in the film. Acceptable |
| | 50 % EVAL H 171B⁽⁶⁾+50% Eco(3)⁽¹⁾ | EVAL | 40 | |
| | 94%Eco(3)⁽¹⁾+4%AB1⁽¹⁾+2%SL1⁽¹⁾ | BASF | 30 | |
| 2032 | 47%Eco(20)⁽¹⁾+47%Eco(3)⁽¹⁾+ 4%AB1⁽¹⁾+2%SL1⁽¹⁾ | BASF | 10 | No film could be made due to large difference in optimal process window of the materials |
| | 50 % Akulon F 136⁽⁷⁾+50% Eco(3)⁽¹⁾ | DSM | 80 | |
| | 47%Eco(20)⁽¹⁾+47%Eco(3)⁽¹⁾+ 4%AB1⁽¹⁾+2%SL1⁽¹⁾ | BASF | 10 | |
| 2033 | 47%Eco(20)⁽¹⁾+47%Eco(3)⁽¹⁾+ 4%AB1⁽¹⁾+2%SL1⁽¹⁾ | BASF | 20 | Smooth film;. Runs ok |
| | 65 % Pebax MV 6100 SA 01⁽²⁾+35 % Eco(3)⁽¹⁾ | Arkema | 60 | |
| | 47%Eco(20)⁽¹⁾+47%Eco(3)⁽¹⁾+ 4%AB1⁽¹⁾+2%SL1⁽¹⁾ | BASF | 20 | |
| 2034 | 94%Eco(3)⁽¹⁾+4%AB1⁽¹⁾+2%SL1⁽¹⁾ | BASF | 33 | Smooth film;. Runs ok |
| | 30 % EVAL H 171B⁽⁶⁾+70% Eco(3)⁽¹⁾ | EVAL | 34 | |
| | 94%Eco(3)⁽¹⁾+4%AB1⁽¹⁾+2%SL1⁽¹⁾ | BASF | 33 | |
| 2035 | 94%Eco(3)⁽¹⁾+4%AB1⁽¹⁾+2%SL1⁽¹⁾ | BASF | 35 | Smooth film; Runs ok |
| | 50 % EVAL H 171B⁽⁶⁾ + 50 % Eco(3)⁽¹⁾ | EVAL | 30 | |
| | 94%Eco(3)⁽¹⁾+4%AB1⁽¹⁾+2%SL1⁽¹⁾ | BASF | 35 | |
| 2037 | 94%Eco(3)⁽¹⁾+4%AB1⁽¹⁾+2%SL1⁽¹⁾ | BASF | 23.5 | Film is quite difficult to produce due to big difference in optimal process temperatures of separate layers. Coating extruder needs higher pressures to work well. |
| | 75 % Akulon F 136⁽⁷⁾+ 25 % Eco(3)⁽¹⁾ | DSM | 53 | |
| | 94%Eco(3)⁽¹⁾+4%AB1⁽¹⁾+2%SL1⁽¹⁾ | BASF | 23.5 | |

| | | | | |
|---|---|---|---|---|
| *(1) Ecoflex is produced by BASF. The Ecoflex (20) and (3) used for these films have a Melt Flow Index (MFI) respectively of 20 and 3g*/*10min AB 1 and SL 1 give some glass and translucency to the final film: (AB1: Antiblocking masterbatch composed of 60% fine chalk and Ecoflex* - *SL 1: Slip masterbatch made of 10% erucamide ESA and Ecoflex)* *⁽²⁾Pebax MV 6100 is produced by Arkema (France). It is a thermoplastic elastomer made of flexible polyether blocks and rigid polyamide blocks* *⁽³⁾*Estane 54610 is produced by Lubrizol (Belgium). Estane is aromatic polyester-based thermoplastic polyurethane. *⁽⁴⁾EVAL F171B is produced by EVAL Europe (Belgium). It is a copolymer made of ethylene and vinyl alcohol. The ethylene content of EVAL F is 32 %mol.* *⁽⁵⁾Enfresin 805 is a polyesterurethane and produced by Sejung C&M (South Korea).* *⁽⁶⁾EVAL H171B: its ethylene content is 38%mol.* *⁽⁷⁾Akulon is a polyamide and is also produced by DSM.* | | | | |

### OTR, CTR and WVTR

The water vapour transmission rate results are presented in the Table 13.

**Table 13: Water vapor transmission rate of foils (ASTM E96 B at 12°C and 85% RH)**

| | | | **Thickness** | | **WVTR** | | **WVTR (corrected to 50µm)** | |
|---|---|---|---|---|---|---|---|---|
| **Code** | **Material** | **Material proportion, [%]** | **Average, [µm]** | **St deviation** | **Average, [g/m².day]** | **St deviation** | **Average, [g/m².day]** | **St deviation** |
| 2027 | Eco/Enf/Eco | 15/70/15 | 46.8 | 5.4 | 6.8 | 0.4 | 6.3 | 0.3 |
| 2028 | Eco/Est/Eco | 15/70/15 | 49.2 | 3.1 | 3.3 | 0.2 | 3.3 | 0.2 |
| 2029 | Eco/Pebax50 -Eco50/Eco | 20/60/20 | 47.6 | 2.5 | 13.4 | 0.4 | 12.7 | 0.3 |
| 2030 | Eco/EVAL/ Eco | 40/20/40 | 48.2 | 5.1 | 1.5 | 0.5 | 1.4 | 0.5 |
| 2031 | Eco/EVAL5 0-Eco50/Eco | 30/40/30 | 52.7 | 1.6 | 2.1 | 0.1 | 2.2 | 0.1 |
| 2033 | Eco/Pebax65 -Eco35/Eco | 20/60/20 | 54.5 | 4.9 | 22.1 | 0.3 | 24.1 | 0.4 |
| 2034 | Eco/EVAL3 0-Eco70/Eco | 33/34/33 | 49.8 | 2.5 | 4.9 | 0.2 | 4.9 | 0.2 |
| 2035 | Eco/EVAL5 0-Eco50/Eco | 35/30/35 | 58.4 | 4.0 | 6.3 | 0.4 | 7.4 | 0.4 |
| | | | | | | | | |
| 2037 | Eco/Akulon 75-Eco25/Eco | 23.5/53/ 23.5 | 122.8 | 0.3 | 5.8 | 0.2 | 14.2 | 0.4 |

**Table 14: Oxygen transmission rate of foils produced for task 3. Measurements are made with Mocon equipment at 12°C and 85% relative humidity (and following ASTM D3985).**

| | | | **Thickness** | | **O₂ permeability at 21% O₂** | | **O₂ permeability at 21% O₂ (corrected to 50µm)** | |
|---|---|---|---|---|---|---|---|---|
| **Code** | **Material** | **Material proportion, [%]** | **Average, [µm]** | **St deviation** | **Average, [ml O₂/m².day.bar]** | **St deviation** | **Average, [ml O₂/m².day.bar]** | **St deviation** |
| 2030 | Eco/EVAL/ Eco | 40/20/40 | 47.4 | 5.4 | 0.015 | 0.009 | 0.0141 | 0.000 9 |
| 2031 | Eco/EVAL 50-Eco50/Eco | 30/40/30 | 40.6 | 5.1 | 0.12 | 0.02 | 0.098 | 0.002 |
| 2033 | Eco/Pebax6 5-Eco65/Eco | 20/60/20 | 54.8 | 4.8 | 129 | 9 | 141.1 | 0.9 |
| 2034 | Eco/EVAL 30-Eco70/Eco | 33/34/33 | 53.2 | 2.0 | 16 | 4 | 17.08 | 0.16 |
| 2035 | Eco/EVAL 50-Eco50/Eco | 35/30/35 | 59.3 | 3.5 | 0.33 | 0.05 | 0.392 | 0.004 |
| | | | | | | | | |
| 2037 | Eco/Akulon 75-Eco25/Eco | 23.5/53/23 .5 | 111. 0 | 0.0 | 3.76 | 0.00 | 8 | 0 |

**Table 15: Oxygen and Carbon dioxide transmission rates of most permeable foils produced for task 3. Transmission rate measured with FBR diffusion system at 12°C and 85% RH.**

| | | | **Thickness** | | **OTR** | | **CTR** | |
|---|---|---|---|---|---|---|---|---|
| **Code** | **Material** | **Material proportion, [%]** | **Average, [µm]** | **St deviation** | **Average, [ml O₂/m².day.bar]** | **St deviation** | **Average, [ml CO₂/m².day.bar]** | **St deviation** |
| 2027 | Eco/Enf/E co | 15/70/15 | 46.3 | 4.3 | 1570 | 15 | 7100 | 60 |
| 2028 | Eco/Est/E co | 15/70/15 | 44.5 | 2.3 | 990 | 50 | 7170 | 60 |
| 2029 | Eco/Pebax 50-Eco50/Ec o | 20/60/20 | 47.2 | 3.5 | 860 | 30 | 11000 | 170 |

The OTR of the foils produced for the option 1 are resumed in the Table 14. With the exception of the foil 2033 (with Pebax material), the OTR of these foils are lower than some of the above described other foils (100mlO₂/m².day.bar). The foils composed with EVAL material show an OTR below 1ml O₂/m².day.bar.

The foils 2033, 2027, 2028 and 2029 (Table 14/15) are highly permeable (OTR around 1000ml O₂/m².day.bar) and so meet the requirements of the second option. In an embodiment, thses foils may be applied. Preferably, the cheese-ripening foil is designed to have an OTR < 1000.

### Mechanical properties

The mechanical properties of the cheese ripening foils in an embodiment preferably meet the following criteria:
- E/Modulus resides between 150 and 400 MPa, more preferably between 150 and 250 200MPa.
It is additionally preferred that tear strength: is preferably 4000 cN/mm or higher, more preferably 10000cN/mm or higher

It is further preferred that the impact strength is: 10J/mm or higher. The results are presented in the Table 16/17.

Especially the foil 2031 made of Ecoflex and EVAL materials has very preferred mechanical properties required for cheese ripening foil purpose as defined above.

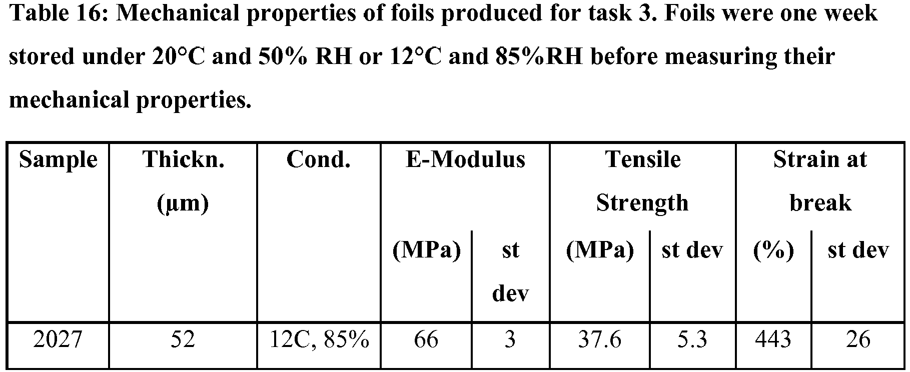

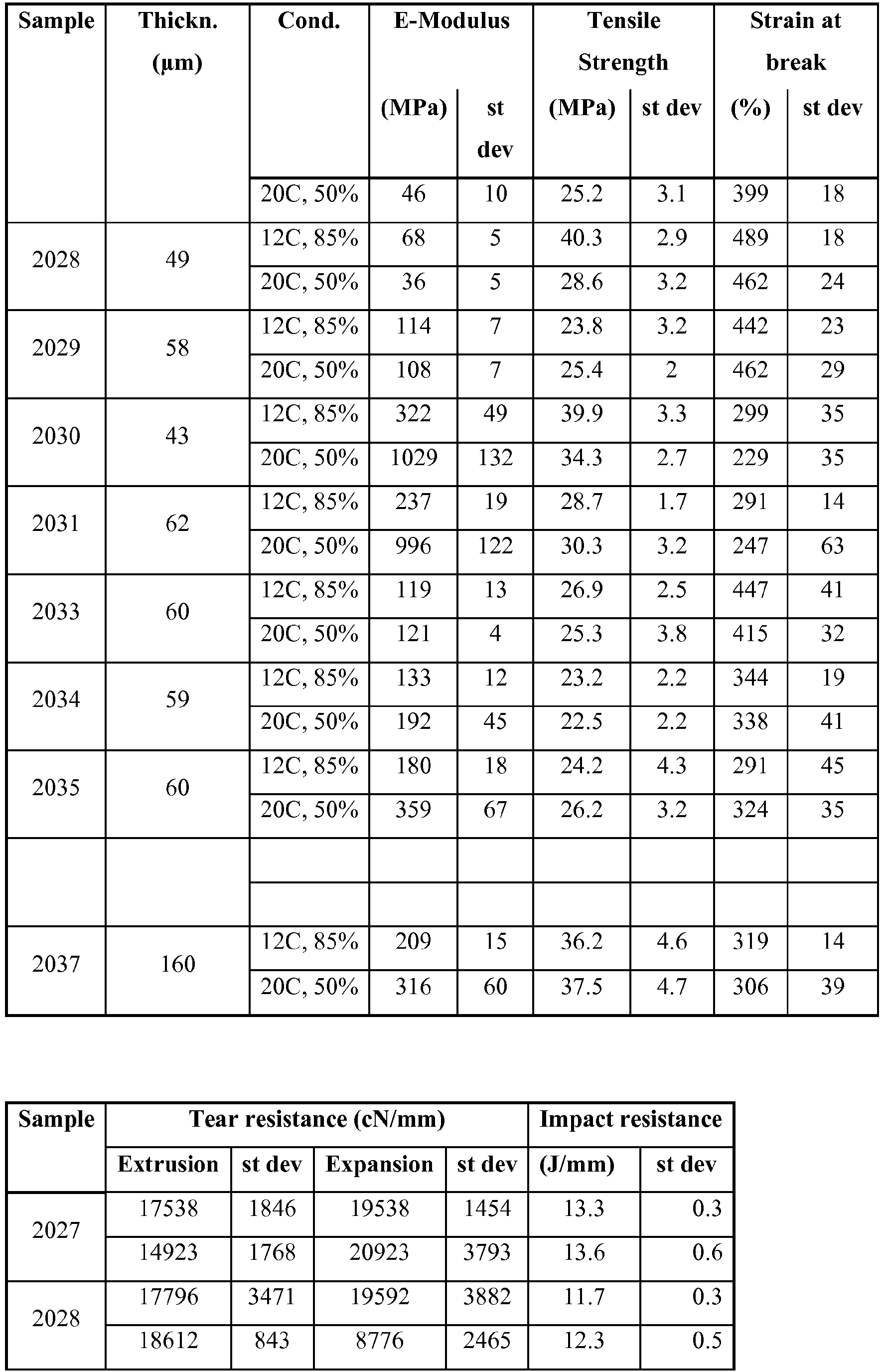

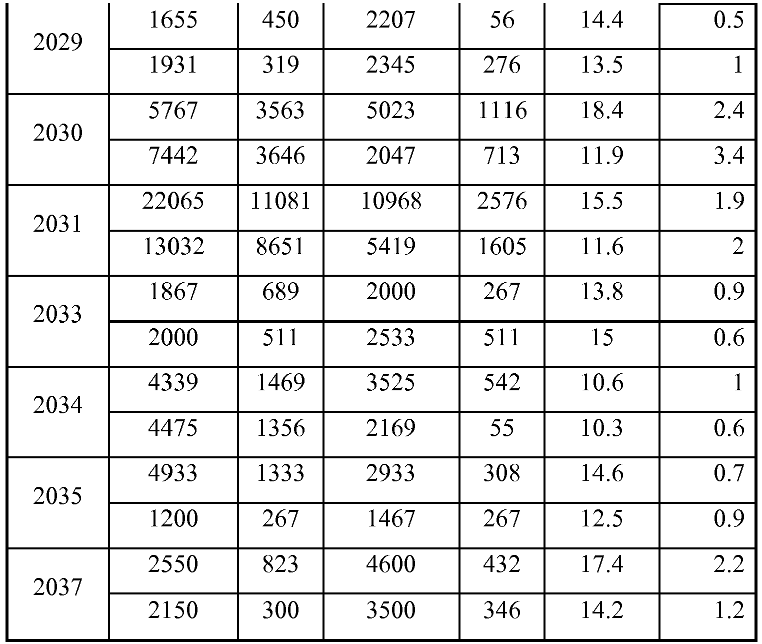

### Cheese test

**Table17: Properties overview of foils tested within the cheese ripening test.**

| **Code** | **Description** | **Temperature seal, [°C]** | **Time sealing, [s]** | **Temperature cooling, [°C]** | **Time sealing vacuum, [s]** |
|---|---|---|---|---|---|
| 2031 | Eco/EVAL50-Eco50/Eco (30/40/30) | 120 | 1 | 80 | 0,8 |
| 2033 | Eco/Pebax65-Eco35/Eco (20/60/20) | 120 | 1 | 80 | 0,8 |
| 2028 | Eco/Estane/Eco (15/70/15) | 120 | 1 | 80 | 0,8 |
| 1951 | 15% Arnitel + 85% Akulon | 180 | 1 | 120 | 2,5 |
| Reference 3 | Traditional barrier foil, Dixie type | 110 | 1 | 80 | 0,8 |
| 2037 | Eco/Akulon75-Eco25/Eco (23.5/53/23.5) | 200 | 1 | 130 | 2,5 |
| 2027 | Eco/Enf/Eco (15/70/15) | 120 | 1 | 80 | 0,8 |
| 2035 | Eco/EVAL50-Eco50/Eco (35/30/35) | 120 | 1 | 80 | 0,8 |

***Manual test: 1cm of foil between the 2 thumbs, stretch the foil over one centimeter in the blowing orientation, and check if the foil comes back in original position (elasticity).**

| **Code** | **Remarks** / **delamination** | **Extension** / **elasticity test** * | **Properties** | **Opening of the bag** |
|---|---|---|---|---|
| 2031 | Some delamination between the inside and middle layers when sealed and pulled out strength applied on each side of the bag, but acceptable | 1/0.2 | Stiff and slightly glass like | Easy opening |
| 2033 | OK | 1/0.5 | Rubber properties | Need talcum between the 2 sides of the bag in order to facilitate the opening of the bag |
| 2028 | OK | 1/1 | Rubber properties | Difficult to loose the 2 side of the bag |
| 1951 | OK | 0/0 | Very stiff and glass like | Easy to open |
| Reference 3 | OK | 1/0.9 | | |
| 2037 | OK | 0/0 | Very stiff: too thick (122µm), tear easily in the direction of the extrusion. | Easy to open |
| 2027 | OK | 1/1 | Rubber, elastic | Difficult to lose the 2 side of the bag |
| 2035 | Some delamination between the inside and middle layers when sealed and pulled out strength applied on each side of the bag, but acceptable | 1/0.2 | Stiff | Need talcum between the 2 sides of the bag in order to facilitate the opening of the bag |

### Description of the packaging conditions

The cheeses are evaluated after 70 days of ripening process. Before opening the bags in order to take samples of the cheese, the vacuum conditions and the structure of the foils are visually studied. During the ripening period, the vacuum condition is maintained for the majority of the foils tested. Some losses of vacuum have been observed for the foils 2028 and 1951. The high oxygen transmission rate of foil 2028 can explain the loss of vacuum.

Concerning the foil 1951, the bad vacuum property seems to result of the high stiffness of the foil (E-Modulus = 481MPa). Indeed the foil is not able to shrink on the surface of the cheese when this one loses its water during storage. The other foils scored much better in this respect. The foils of Option 1 with OTR < 100 and improved mechanical properties had the best overall behaviour in cheese packaging and ripening (nice shrinking on surface, no vacuum loss during ripening)

**Table18: Comparison between WVTR values obtained with ASTM E96 method and with cheese test.**

| **Code material** | **WVTR calculated with cheese test result, [g/m².day]** | **WVTR measured with ASTM E96 method, [g/m².day]** |
|---|---|---|
| Reference 3 | 0.1 | 0 |
| 1951 | 20.5 | 45.8 |
| 2027 | 12.6 | 6.8 |
| 2028 | 13.0 | 3.3 |
| 2031 | 3.6 | 2.1 |
| 2033 | 19.8 | 22.1 |
| 2035 | 4.9 | 6.3 |
| 2037 | 4.3 | 5.8 |

### Growth of fungi or other observations

The fungi growth was evaluated after 40 and 70 days of ripening process. Fungal growth after 40 days:
The cheeses packed within foils made for the option 2 are subjected to fungi growth from the beginning of the ripening phase. The high OTR of the foils 2033, 2028 and 2027 does not control the fungal growth near the edges of the packing (for cheese non-treated with Natamycin).
No fungi growth is observed on cheese pre-treated with Natamycin, whatever the permeability of the ripening foil. After 40 days of storage, the cheese which were not treated with natamycin show fungial development in case of the foils of the option 2. The foils with low OTR property (<100 ml O₂/m².day.bar) don't show any fungal growth.

### Fungal growth after 70 days of ripening

The fungal growth is resumed in the Table 19.

On the basis of these observations, it is possible to draw the following remarks:
- The cheeses packed within foil with high OTR property show fungal growth after 70 days of storage. The Natamycin pre-treatment permits to delay the growth of at least 40 days but does not inhibit completely the growth during the complete ripening period. Light fungal presence has been observed at the edges of the cheese pre-treated with Natamycin.
- The foils with low OTR property permit the control of the fungi growth during the ripening period.
   ∘ The light fungal growth observed for 1951 foil is probably due to the loss of vacuum condition during the ripening process. Due to too high stiffness of the foil, the contact between the cheese and the foil is not assured with this foil and it results to fungal growth in the seal/wrinkles positions.
   ∘ The pre-treatment with Natamycin is not anymore needed when the cheese is packed within ripening foil with a low OTR property (OTR <5 ml O₂/m².day.bar)

**Table 19: Overview of fungal growth after 70 days of ripening storage (NT: Non Tested)**

| **Code** | **Description** | **OTR** | **WVTR** | **Fungal growth (with natamycin); date 28/4** | **Fungal growth (without natamycin); date 28/4** |
|---|---|---|---|---|---|
| Reference 3 | Barrier foil type Dixe | 38 | 0 | all cheeses perfect | all cheeses perfect |
| 1951 | **15% Arnitel + 85% Akulon = Reference 4** | 8 | 50 | perfect | Little fungal growth in seal |

| **Option 1** | | | | | |
|---|---|---|---|---|---|
| 2031 | Eco/EVAL50-Eco50/Eco (30/40/30) | 0.12 | 2.1 | all cheeses perfect | all cheeses perfect |
| 2035 | Eco/EVAL50-Eco50/Eco (35/30/35) | 0.33 | 6.3 | all cheeses perfect | all cheeses perfect |
| 2037 | Eco/Akulon75-Eco25/Eco (23.5/53/23.5) | 4 | 5.8 | NT | all cheeses perfect |

| **Option 2** | | | | | |
|---|---|---|---|---|---|
| 2033 | Eco/Pebax65-Eco35/Eco (20/60/20) | 129 | 22.1 | white glow on external surface of foil, fungi in seals | fungi all over |
| 2028 | Eco/Estane/Eco (17/70/15) | 990 | 3.3 | some fungi in seal | severe fungal spoilage |
| 2027 | Eco/Enf/Eco (15/70/15) | 1570 | 6.8 | NT | severe fungal growth |

### Flavour development of the cheese

Differences in flavour perception were surprisingly small amongst the cheeses, even compared between 1951 (highest WVTR) and the traditional barrier foil (WVTR = 0).

## Claims

1. A method for foil-ripening a cheese comprising:
a. providing a cheese having an edge, a first face and a second face;
b. packaging said cheese in a closed cheese-ripening foil having a water vapour transmission rate of at least 5 g/(m².24 hours) at 12 °C and 85% relative humidity, having an oxygen transmission rate of ≤ 100 cm³/m².24 hours.atm at 12 °C and 85% relative humidity, and having a tensile modulus in the range of 150-400 MPa at 12 °C and 85% relative humidity; and
c. ripening the foil-packaged cheese wherein during ripening moisture is allowed to evaporate from said cheese.

2. The method according to claim 1, wherein the cheese-ripening foil has a water vapour transmission rate of at least 10 g/(m².24 hours) at 12 °C and 85% relative humidity.

3. The method according to any one of the preceding claims, wherein the cheese-ripening foil has an oxygen transmission rate in the range of ≤ 1 cm³/m².24 hours.atm at 12 °C and 85% relative humidity.

4. The method according to any one of the preceding claims, wherein the cheese-ripening foil has a tensile modulus in the range of 150-250 MPa at 12 °C and 85% relative humidity.

5. The method according to any one of the preceding claims, wherein the cheese-ripening foil has a tear resistance of at least 4000 cN/mm measured in expansion direction at 12 °C and 85% relative humidity.

6. The method according to any one of the preceding claims, wherein the foil-packaged cheese is ripened under (1) a condition of relative humidity in the range between 20-95%, and/or under (2) a condition of the air near the foil-packaged cheese being displaced at a rate of 0.01 - 5 m/s.

7. The method according to claim 6, wherein either under (1) or under (2) during ripening in (c.) the total amount of moisture which is allowed to evaporate from the foil-packaged cheese is 0.5 - 20 wt.% relative to the weight of the foil-packaged cheese provided in (b.).

8. The method according to any one of the preceding claims, wherein the cheese-ripening foil comprises a multi-layer foil as cheese-ripening foil.

9. The method according to claim 8, wherein a layer of the multi-layer foil in contact with the cheese and/or an outer layer of the multi-layer foil comprises a statistical, aliphatic-aromatic co-polyester of the monomers 1,4-butanediol, adipic acid, and a terephthalic acid.

10. The method according to any one of the preceding claims, comprising ripening the foil-packaged cheese in the presence of a frame which surrounds at least part of the edge of said cheese, and wherein the frame is in contact with the edge in the range of 1-80% of the surface of the edge.

11. The method according to any one of the preceding claims, wherein the ripened foil-ripened cheese obtained in (c.) comprises a drying rind which is visibly present near one or both of its faces and/or the edge.

12. The method according to any one of the preceding claims, wherein the cheese further comprises a strain of *Lactobacillus helveticus* or propionibacteria.

13. The method according to any one of the preceding claims wherein the cheese is of the Gouda type.

14. A cheese-ripening foil having a water vapour transmission rate of at least 5 g/(m².24 hours) at 12 °C and 85% relative humidity, an oxygen transmission rate of ≤ 100 cm³/m².24 hours.atm at 12 °C and 85% relative humidity; and a tensile modulus in the range of 150-400 MPa at 12 °C and 85% relative humidity.

15. A foil-packaged cheese, optionally at least partially surrounded by a frame, obtainable according to the method of any one of claims 1-13.

## Patentansprüche

1. Verfahren zur Folienreifung eines Käses, umfassend:
a. Bereitstellen eines Käses mit einer Kante, einer ersten Fläche und einer zweiten Fläche;
b. Packen des Käses in eine geschlossene Käsereifungsfolie mit einer Wasserdampftransmissionsrate von wenigstens 5 g/(m².24 Stunden) bei 12°C und 85% relativer Feuchtigkeit, mit einer Sauerstofftransmissionsrate von ≤ 100 cm³/m².24 Stunden.atm bei 12°C und 85% relativer Feuchtigkeit, und mit einem Zugmodul im Bereich von 150-400 MPa bei 12°C und 85% relativer Feuchtigkeit; und
c. Reifen des folienverpackten Käses, wobei während des Reifens es Feuchtigkeit erlaubt wird, aus dem Käse zu verdampfen.

2. Verfahren nach Anspruch 1, wobei die Käsereifungsfolie eine Wasserdampftransmissionsrate von wenigstens 10 g/(m².24 Stunden) bei 12°C und 85% relativer Feuchtigkeit aufweist.

3. Verfahren nach einem der vorangehenden Ansprüche, wobei die Käsereifungsfolie eine Sauerstofftransmissionsrate im Bereich von ≤ 1 cm³/m².24 Stunden.atm bei 12°C und 85% relativer Feuchtigkeit aufweist.

4. Verfahren nach einem der vorangehenden Ansprüche, wobei die Käsereifungsfolie einen Zugmodul im Bereich von 150-250 MPa bei 12°C und 85% relativer Feuchtigkeit aufweist.

5. Verfahren nach einem der vorangehenden Ansprüche, wobei die Käsereifungsfolie eine Reißfestigkeit von wenigstens 4000 cN/mm aufweist, gemessen in Expansionsrichtung bei 12°C und 85% relativer Feuchtigkeit.

6. Verfahren nach einem der vorangehenden Ansprüche, wobei der folienverpackte Käse reift unter (1) einer Bedingung einer relativen Feuchtigkeit im Bereich zwischen 20-95%, und/oder unter (2) einer Bedingung, dass die Luft nahe des folienverpackten Käses mit einer Rate von 0,01-5 m/s ausgetauscht wird.

7. Verfahren nach Anspruch 6, wobei entweder unter (1) oder unter (2) während des Reifens in (c.) die Gesamtmenge an Feuchtigkeit, die aus dem folienverpackten Käse verdampfen kann, 0,5-20 Gew.-% relativ zu dem Gewicht des in (b.) bereitgestellten folienverpackten Käses ist.

8. Verfahren nach einem der vorangehenden Ansprüche, wobei die Käsereifungsfolie eine mehrschichtige Folie als Käsereifungsfolie umfasst.

9. Verfahren nach Anspruch 8, wobei eine Schicht der Mehrschichtfolie in Kontakt mit dem Käse und/oder eine äußere Schicht der Mehrschichtfolie einen statistischen aliphatischen-aromatischen Co-Polyester der Monomere 1,4-Butandiol, Adipinsäure und einer Terephthalsäure umfasst.

10. Verfahren nach einem der vorangehenden Ansprüche, umfassend ein Reifen des folienverpackten Käses in der Gegenwart eines Rahmens, der wenigstens einen Teil der Kante des Käses umgibt, und wobei der Rahmen in Kontakt ist mit der Kante im Bereich von 1-80% der Oberfläche der Kante.

11. Verfahren nach einem der vorangehenden Ansprüche, wobei der gereifte foliengereifte Käse, erhalten in (c.), eine Trocknungsrinde umfasst, die nahe einer oder beiden ihrer Oberflächen und/oder der Kante sichtbar ist.

12. Verfahren nach einem der vorangehenden Ansprüche, wobei der Käse ferner einen Stamm von *Lactobacillus helveticus* oder Propionibakterien umfasst.

13. Verfahren nach einem der vorangehenden Ansprüche, wobei der Käse vom Typ Gouda ist.

14. Käsereifungsfolie mit einer Wasserdampftransmissionsrate von wenigstens 5 g/(m².24 Stunden) bei 12°C und 85% relativer Feuchtigkeit, einer Sauerstofftransmissionsrate von ≤ 100 cm³/m².24 Stunden.atm bei 12°C und 85% relativer Feuchtigkeit; und einem Zugmodul im Bereich von 150-400 MPa bei 12° und 85% relativer Feuchtigkeit.

15. Folienverpackter Käse, optional wenigstens teilweise umgeben von einem Rahmen, erhältlich nach dem Verfahren nach einem der Ansprüche 1 bis 13.

## Revendications

1. Procédé d'affinage en feuille d'un fromage comprenant :
a. la fourniture d'un fromage ayant un bord, une première face et une seconde face ;
b. l'emballage dudit fromage dans une feuille d'affinage du fromage fermée présentant un taux de transmission de la vapeur d'eau d'au moins 5 g/(m2.24 heures) à 12 °C et à une humidité relative de 85 %, présentant un taux de transmission de l'oxygène de ≤ 100 cm3/m2.24 heures.atm à 12 °C et à une humidité relative de 85 %, et présentant un module d'élasticité en traction dans la plage de 150 à 400 MPa à 12 °C et à une humidité relative de 85 % ; et
c. l'affinage du fromage emballé dans une feuille dans lequel au cours de l'affinage on laisse l'humidité s'évaporer dudit fromage.

2. Procédé selon la revendication 1, dans lequel la feuille d'affinage du fromage présente un taux de transmission de la vapeur d'eau d'au moins 10 g/(m2.24 heures) à 12 °C et à une humidité relative de 85 %.

3. Procédé selon l'une quelconque des revendications précédentes, dans lequel la feuille d'affinage du fromage présente un taux de transmission de l'oxygène dans la plage de ≤ 1 cm3/m2.24 heures.atm à 12 °C et à une humidité relative de 85 %.

4. Procédé selon l'une quelconque des revendications précédentes, dans lequel la feuille d'affinage du fromage présente un module d'élasticité en traction dans la plage de 150 à 250 MPa à 12 °C et à une humidité relative de 85 %.

5. Procédé selon l'une quelconque des revendications précédentes, dans lequel la feuille d'affinage du fromage présente une résistance à la déchirure d'au moins 4 000 cN/mm mesurée dans la direction d'expansion à 12 °C et à une humidité relative de 85 %.

6. Procédé selon l'une quelconque des revendications précédentes, dans lequel le fromage emballé dans une feuille est affiné dans (1) des conditions d'humidité relative dans la plage entre 20 et 95 %, et/ou dans (2) des conditions dans lesquelles l'air près du fromage emballé dans une feuille est déplacé à un taux de 0,01 à 5 m/s.

7. Procédé selon la revendication 6, dans lequel soit dans (1) soit dans (2) au cours de l'affinage en (c.) la quantité totale d'humidité que l'on laisse s'évaporer du fromage emballé dans une feuille est de 0,5 à 20 % en poids par rapport au poids du fromage emballé dans une feuille fournie en (b.).

8. Procédé selon l'une quelconque des revendications précédentes, dans lequel la feuille d'affinage du fromage comprend une feuille à plusieurs couches en tant que feuille d'affinage du fromage.

9. Procédé selon la revendication 8, dans lequel une couche de la feuille à plusieurs couches en contact avec le fromage et/ou une couche externe de la feuille à plusieurs couches comprend un co-polyester aliphatique-aromatique statistique des monomères 1,4-butanediol, acide adipique et un acide téréphtalique.

10. Procédé selon l'une quelconque des revendications précédentes, comprenant l'affinage du fromage emballé dans une feuille en présence d'un cadre qui entoure au moins une partie du bord dudit fromage, et dans lequel le cadre est en contact avec le bord dans la plage de 1 à 80 % de la surface du bord.

11. Procédé selon l'une quelconque des revendications précédentes, dans lequel le fromage affiné en feuille obtenu en (c.) comprend une croûte de séchage qui est visiblement présente près de l'un(e) ou des deux parmi ses faces et/ou le bord.

12. Procédé selon l'une quelconque des revendications précédentes, dans lequel le fromage comprend en outre une souche de Lactobacillus helveticus ou de propionibacteria.

13. Procédé selon l'une quelconque des revendications précédentes dans lequel le fromage est du type Gouda.

14. Feuille d'affinage du fromage présentant un taux de transmission de la vapeur d'eau d'au moins 5 g/(m2.24 heures) à 12 °C et à une humidité relative de 85 %, un taux de transmission de l'oxygène de ≤ 100 cm3/m2.24 heures.atm à 12 °C et à une humidité relative de 85 % ; et un module d'élasticité en traction dans la plage de 150 à 400 MPa à 12 °C et à une humidité relative de 85 %.

15. Fromage emballé dans une feuille, facultativement au moins partiellement entouré d'un cadre, pouvant être obtenu suivant le procédé selon l'une quelconque des revendications 1 à 13.
